# EUROPEAN PATENT APPLICATION

(11) **EP 4 851 259 A1**
(43) Date of publication of application: **09.12.2026**
(21) Application number: 25748155.6
(22) Date of filing: 27.01.2025
(51) Int. Cl.: C09J 9/02, C09J 11/04, C09J 133/04, C09J 163/00, C09J 175/04

(54) **ADHESIVE LAYER, LAMINATE, CURABLE COMPOSITION, METHOD FOR PRODUCING RECYCLED PRODUCT, AND METHOD FOR REDUCING ADHESIVE STRENGTH**

(30) Priority: 01.02.2024 JP 2024013968
(71) Applicant: WASEDA UNIVERSITY, Shinjuku-ku Tokyo 169-8050 (JP); ADEKA CORPORATION, Arakawa-ku Tokyo 116-8554 (JP)
(72) Inventor: TOKORO, Chiharu, Tokyo 169-8050 (JP); INUTSUKA, Manabu, Tokyo 169-8050 (JP); KOITA, Taketoshi, Tokyo 169-8050 (JP); MATSUO, Kosei, Tokyo 169-8050 (JP); OGAWA, Ryo, Tokyo 116-8554 (JP); OTA, Keisuke, Tokyo 116-8554 (JP)
(74) Representative: Müller-Boré & Partner Patentanwälte PartG mbB
(86) International application number: PCT/JP2025/002457
(87) International publication number: WO 2025/164573

(57) **Abstract**

This disclosure is directed to: an adhesion layer, including: a first adhesion layer; and a second adhesion layer having a dielectric strength higher than that of the first adhesion layer, wherein the adhesion layer is used for electric pulse peeling; a laminate including the adhesion layer; a curable composition for forming the adhesion layer; a method of producing a recycled product; and a method of reducing an adhesive strength.

## Description

### Technical Field

The present invention relates to an adhesion layer to be used for electric pulse peeling.

### Background Art

It has been required that communication terminal equipment, home appliances, and the like that are not used any longer along with breakdown or a change in product life cycle be collected by vendors, and then disassembled and dismantled to be recycled or reused. Hitherto, the operation has been performed by subjecting a product to manual disassembling and then to physical dismantling with a crusher or the like in many cases.

In recent years, there has been a report of an electric pulse dismantling method, the method comprising: bringing a plurality of electrodes into abutment against positions separated from each other on the surface of an object in which an insulator and a conductor are bonded or joined to each other; and applying a voltage between the electrodes to disassemble the object into the insulator and the conductor (Patent Document 1).

### Citation List

### Patent Document

[Patent Document 1] JP 2020-069454 A

### Summary of Invention

### Technical Problem

However, in the method described in Patent Document 1, there has been a problem in that even when an electric pulse is applied, the reduction in adhesive strength of a joined portion, that is, an adhesion layer, may be insufficient, and hence dismantling is difficult.

The present invention has been made in view of the above-mentioned problem, and a primary object of the present invention is to provide an adhesion layer capable of being stably reduced in adhesive strength by applying an electric pulse.

### Solution to Problem

The inventors of the present invention have made extensive investigations, and as a result, have found that when adhesion layers having different dielectric strengths are used, an adhesive strength can be stably reduced by applying an electric pulse.

That is, this disclosure provides an adhesion layer, comprising: a first adhesion layer; and a second adhesion layer having a dielectric strength higher than that of the first adhesion layer, wherein the adhesion layer is used for electric pulse peeling.

In addition, this disclosure provides a laminate, comprising a first member and a second member joined to each other via an adhesion layer, wherein the adhesion layer comprises a first adhesion layer and a second adhesion layer having a dielectric strength higher than that of the first adhesion layer, and wherein the laminate is used for electric pulse peeling.

Further, this disclosure provides a curable composition, comprising: a conductive material; and a resin component, wherein the curable composition is used for forming a first adhesion layer of an adhesion layer comprising the first adhesion layer and a second adhesion layer having a dielectric strength higher than that of the first adhesion layer, the adhesion layer being used for electric pulse peeling.

In addition, this disclosure provides a method of reducing an adhesive strength, the method comprising a step of applying an electric pulse to a laminate comprising a first member and a second member joined to each other via an adhesion layer, wherein the adhesion layer comprises a first adhesion layer and a second adhesion layer having a dielectric strength higher than that of the first adhesion layer, and a method of producing a recycled product using the method of reducing an adhesive strength.

### Advantageous Effects of Invention

According to this disclosure, the adhesion layer capable of being stably reduced in adhesive strength by applying an electric pulse can be provided.

### Brief Description of Drawings

FIG. 1A is a schematic plan view for illustrating an example of an adhesion layer of this disclosure, and FIG. 1B is a cross-sectional view taken along the line A-A.
FIG. 2A is a schematic plan view for illustrating another example of the adhesion layer of this disclosure, and FIG. 2B is a cross-sectional view taken along the line A-A.
FIG. 3A is a schematic plan view for illustrating another example of the adhesion layer of this disclosure, and FIG. 3B is a cross-sectional view taken along the line A-A.
FIG. 4 is a schematic plan view for illustrating another example of the adhesion layer of this disclosure.
FIG. 5 is a schematic cross-sectional view for illustrating an example of a laminate of this disclosure.
FIG. 6 is a schematic view for illustrating an example of a high-voltage pulse generator to be used in a method of reducing an adhesive strength of this disclosure.
FIG. 7 is a circuit diagram for illustrating an example of a high-voltage pulse generator to be used for reducing the adhesive strength of the adhesion layer of this disclosure.
FIG. 8A is a schematic plan view for illustrating a method of forming a laminate according to Examples, and FIG. 8B is a schematic plan view for illustrating a method of forming a laminate according to Examples.
FIG. 9 is a schematic cross-sectional view for illustrating a laminate according to Examples.
FIG. 10 is a graph showing the voltage/current waveforms of electric pulses applied to laminates of Examples and Comparative Examples.
FIGS. 11 are each an enlarged photograph of an adhesion layer after a laminate of Example 1 is dismantled.
FIGS. 12 are each an enlarged photograph of an adhesion layer after a laminate of Example 2 is dismantled.
FIGS. 13 are each an enlarged photograph of an adhesion layer after a laminate of Example 3 is dismantled.
FIGS. 14 are each an enlarged photograph of an adhesion layer after a laminate of Example 4 is dismantled.
FIGS. 15 are each an enlarged photograph of an adhesion layer after a laminate of Example 5 is dismantled.
FIGS. 16 are each an enlarged photograph of an adhesion layer after a laminate of Example 6 is dismantled.
FIGS. 17 are each an enlarged photograph of an adhesion layer after a laminate of Example 7 is dismantled.
FIGS. 18 are each an enlarged photograph of an adhesion layer after a laminate of Example 8 is dismantled.
FIGS. 19 are each an enlarged photograph of an adhesion layer after a laminate of Comparative Example 1 is dismantled.
FIGS. 20 are each an enlarged photograph of an adhesion layer after a laminate of Comparative Example 2 is dismantled.
FIGS. 21 are each an enlarged photograph of an adhesion layer after a laminate of Comparative Example 3 is dismantled.
FIGS. 22 are each an enlarged photograph of an adhesion layer after a laminate of Comparative Example 4 is dismantled.
FIGS. 23 are each an enlarged photograph of an adhesion layer after a laminate of Comparative Example 5 is dismantled.

### Description of Embodiments

This disclosure relates to an adhesion layer, a laminate comprising the same, a curable composition to be used for forming an adhesion layer, a method of producing a recycled product, and a method of reducing an adhesive strength.

The adhesion layer, laminate, curable composition, method of producing a recycled product, and method of reducing an adhesive strength of this disclosure are described in detail below.

### A. Adhesion Layer

First, the adhesion layer of this disclosure is described.

The adhesion layer of this disclosure is characterized by comprising a first adhesion layer and a second adhesion layer having a dielectric strength higher than that of the first adhesion layer, and is characterized by being used for electric pulse peeling.

When the adhesion layer has the above-mentioned structure, the adhesive strength of the adhesion layer after the application of an electric pulse can be stably reduced.

The reason why the adhesive strength of the adhesion layer after the application of the electric pulse can be stably reduced when the adhesion layer has the above-mentioned structure is unclear, but is assumed to be as described below.

That is, when the adhesion layer comprises the first adhesion layer and the second adhesion layer, internal discharge can be caused to preferentially occur in the first adhesion layer having a low dielectric strength at the time of the application of the electric pulse, and hence the adhesive strength of the adhesion layer can be reduced with the first adhesion layer as the center.

In addition, a method of forming such adhesion layer as described above in a pattern or the like may be adopted as a method of forming the first adhesion layer and the second adhesion layer. Accordingly, for example, the first adhesion layer can be formed at a desired position, and hence internal discharge can be caused to occur at a desired position at the time of the application of the electric pulse.

### A-1. Electrical Properties of Adhesion Layer

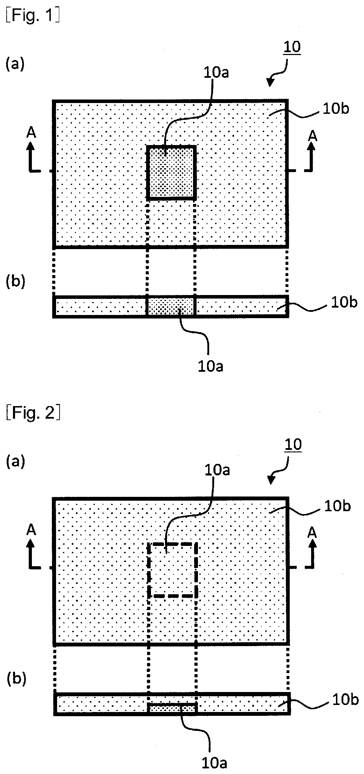

The adhesion layer of this disclosure is described with reference to FIGS. 1. As illustrated in FIG. 1A and FIG. 1B, an adhesion layer 10 of this disclosure comprises a first adhesion layer 10a and a second adhesion layer 10b having a dielectric strength higher than that of the first adhesion layer 10a.

When the adhesion layer 10 comprises the first adhesion layer 10a and the second adhesion layer 10b having different dielectric strengths, a discharge position in the adhesion layer 10 at the time of the application of the electric pulse can be easily controlled to be in the first adhesion layer 10 having a low dielectric strength. Accordingly, the adhesive strength of the adhesion layer 10 after the application of the electric pulse can be more stably reduced.

The absolute value of the difference between the dielectric strength of the first adhesion layer 10a and the dielectric strength of the second adhesion layer 10b may be any value as long as the adhesion layer 10 capable of being stably reduced in adhesive strength after the application of the electric pulse can be obtained. The absolute value is preferably 0.1 kV/mm or more and 60 kV/mm or less, more preferably 10 kV/mm or more and 55 kV/mm or less, still more preferably 20 kV/mm or more and 50 kV/mm or less, particularly preferably 30 kV/mm or more and 50 kV/mm or less, most preferably 40 kV/mm or more and 50 kV/mm or less. This is because the adhesion layer 10 can be more stably reduced in adhesive strength after the application of the electric pulse.

The dielectric strength of the first adhesion layer 10a may be any value as long as the adhesion layer 10 capable of being stably reduced in adhesive strength after the application of the electric pulse can be obtained. The dielectric strength of the first adhesion layer 10a is preferably 0.1 kV/mm or more and 60 kV/mm or less, more preferably 0.5 kV/mm or more and 50 kV/mm or less, still more preferably 1 kV/mm or more and 40 kV/mm or less, particularly preferably 5 kV/mm or more and 30 kV/mm or less, most preferably 10 kV/mm or more and 20 kV/mm or less. This is because when the dielectric strength falls within the above-mentioned ranges, the difference in dielectric strength between the first adhesion layer 10a and the second adhesion layer 10b can be easily adjusted, and hence the adhesive strength of the adhesion layer 10 can be more stably reduced after the application of the electric pulse. In addition, this is because the first adhesion layer 10a can be easily formed by using, for example, a curable composition comprising a conductive material and a resin component.

The dielectric strength of the second adhesion layer 10b may be any value as long as the adhesion layer 10 that can be stably reduced in adhesive strength after the application of the electric pulse can be obtained. The dielectric strength of the second adhesion layer 10b is preferably 1 kV/mm or more and 100 kV/mm or less, is more preferably 10 kV/mm or more and 90 kV/mm or less, still more preferably falls within the range of 20 kV/mm or more and 80 kV/mm or less, and particularly preferably falls within the range of 40 kV/mm or more and 70 kV/mm or less. This is because when the dielectric strength falls within the above-mentioned ranges, the difference in dielectric strength between the first adhesion layer 10a and the second adhesion layer 10b can be easily adjusted, and hence the adhesive strength of the adhesion layer 10 after the application of the electric pulse can be more stably reduced. In addition, this is because the second adhesion layer 10b can be easily formed by using, for example, a curable composition comprising a resin component, or a conductive material and a resin component.

### A-2. Shapes and Arrangement Patterns of First Adhesion Layer and Second Adhesion Layer

In this disclosure, the shapes and arrangements of the first adhesion layer 10a and the second adhesion layer 10b are not particularly limited.

For example, as illustrated in FIG. 1A and FIG. 1B, the first adhesion layer 10a having a rectangular shape may be disposed at a position where the centers of gravity of the adhesion layer 10 and the first adhesion layer 10a in plan view coincide with each other so that the entire periphery of the first adhesion layer 10a is adjacent to the second adhesion layer 10b in plan view. When the first adhesion layer 10a and the second adhesion layer 10b are disposed in this manner, internal discharge can be caused to occur at the center of the adhesion layer 10 in plan view at the time of the application of the electric pulse, and hence the adhesive strength of the adhesion layer 10 after the application of the electric pulse can be more stably reduced.

In this case, it is preferred that the first adhesion layer 10a and the second adhesion layer 10b have the same thickness. This is because when the adhesion layer 10 has a uniform thickness, an excellent adhesive strength is achieved in the case where the first member and the second member are joined to each other via the adhesion layer 10.

In addition, as illustrated in FIG. 2A and FIG. 2B, the second adhesion layer 10b may be formed so as to cover not only the entire periphery of the first adhesion layer 10a in plan view but also an upper surface thereof. That is, a portion in which the first adhesion layer 10a and the second adhesion layer 10b are laminated in the stated order may exist. Even when the first adhesion layer 10a and the second adhesion layer 10b have such arrangement, at the time of the application of the electric pulse, internal discharge can be caused to occur at the center of the adhesion layer 10 in plan view, that is, in the above-mentioned laminated portion having a dielectric strength lower than that of a portion where only the second adhesion layer 10b is formed, and hence the adhesive strength of the adhesion layer 10 after the application of the electric pulse can be more stably reduced.

In this case as well, the thickness of the adhesion layer 10 is preferably uniform.

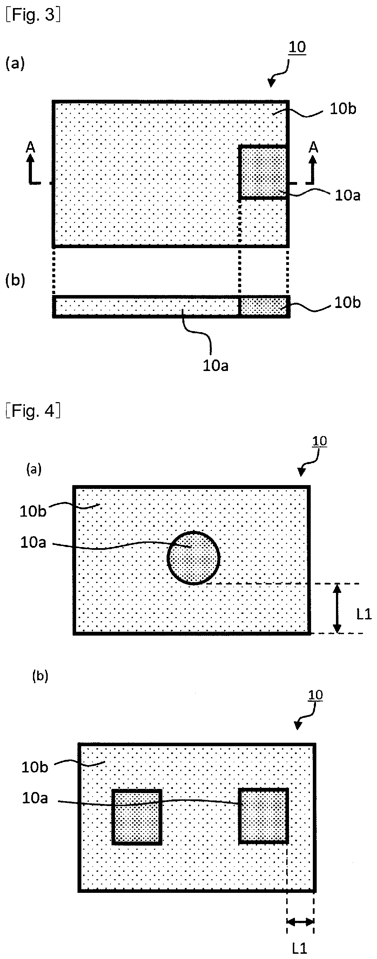

As illustrated in FIG. 3A and FIG. 3B, the arrangement pattern of the first adhesion layer 10a and the second adhesion layer 10b may be a pattern in which part of the periphery of the first adhesion layer 10a is adjacent to the second adhesion layer 10b. However, as illustrated in FIGS. 1 and FIGS. 2 as already described, the arrangement pattern is preferably an arrangement pattern in which the entire periphery of the first adhesion layer 10a is adjacent to the second adhesion layer 10b. This is because when the first adhesion layer 10a and the second adhesion layer 10b are formed in such arrangement pattern, internal discharge can be more securely caused to occur in the adhesion layer 10 at the time of the application of the electric pulse, and hence the adhesive strength of the adhesion layer 10 after the application of the electric pulse can be more stably reduced.

The shape in plan view of the first adhesion layer 10a is not particularly limited, and may be a polygonal shape as illustrated in FIG. 1A and FIG. 2A as already described, but may be a circular shape as illustrated in FIG. 4A.

The number of the first adhesion layers 10a may be one in the adhesion layer 10 as illustrated in FIGS. 1 and FIGS. 2 as already described, but may be two or more as illustrated in FIG. 4B.

The area of the first adhesion layer 10a may be any area as long as the adhesion layer 10 capable of being stably reduced in adhesive strength after the application of the electric pulse can be obtained. The area of the first adhesion layer 10a is preferably 1 mm² or more, more preferably 3 mm² or more and 200 mm² or less, still more preferably 5 mm² or more and 100 mm² or less, even still more preferably 10 mm² or more and 80 mm² or less, particularly preferably 15 mm² or more and 60 mm² or less, most preferably 20 mm² or more and 40 mm² or less. This is because discharge by the application of the electric pulse can be stably caused to occur with ease in the adhesion layer 10, particularly in the first adhesion layer 10a, and the adhesion layer 10 capable of being more stably reduced in adhesive strength after the application of the electric pulse is obtained.

The area of the first adhesion layer 10a refers to an area in plan view observed when the adhesion layer 10 is viewed in plan view. In addition, when the adhesion layer 10 comprises two or more first adhesion layers 10a, the area refers to the area of each individual first adhesion layer 10a.

The distance between an end portion of the first adhesion layer 10a and an end portion of the adhesion layer 10 (hereinafter sometimes referred to as "end-to-end distance"), that is, the width of the second adhesion layer 10b separating the first adhesion layer 10a and the end portion of the adhesion layer 10 may be any width as long as the adhesion layer 10 capable of being stably reduced in adhesive strength after the application of the electric pulse can be obtained. The width is preferably 1 mm or more, more preferably 5 mm or more, still more preferably 8 mm or more. This is because discharge can be easily caused to occur by the application of the electric pulse in the adhesion layer 10, particularly in the first adhesion layer 10a, and the adhesion layer 10 capable of being more stably reduced in adhesive strength after the application of the electric pulse is obtained.

The term "end-to-end distance" refers to the shortest distance L1 between the end portion of the first adhesion 10a and the end portion of the adhesion layer 10 in plan view, as illustrated in FIG. 4A and FIG. 4B as already described.

The thickness of the first adhesion layer 10a may be any thickness as long as the adhesion layer 10 capable of being stably reduced in adhesive strength after the application of the electric pulse can be obtained. The thickness of the first adhesion layer 10a is preferably 30 or more and 200 or less, more preferably 50 or more and 150 or less, still more preferably 80 or more and 120 or less, even still more preferably 90 or more and 110 or less, particularly preferably 95 or more and 105 or less with respect to the thickness of the second adhesion layer 10b defined as 100. It is most preferred that the thickness be 100 with respect thereto, that is, the first adhesion layer 10a and the second adhesion layer 10b have the same thickness. This is because a laminate having an excellent adhesive strength before the application of the electric pulse can be easily formed. In addition, according to the adhesion layer 10, the adhesive strength of the adhesion layer 10 after the application of the electric pulse can be stably reduced even without formation of a conductive protrusion or the like for causing the dielectric breakdown of the adhesion layer 10 on the first member or the second member for forming the laminate. Accordingly, the adhesion layer 10 having a uniform thickness can be obtained, and the first member and the second member having no protrusion or the like can each be obtained as a recycled product, and hence the use of the recycled product becomes easy.

The thicknesses of the first adhesion layer 10a and the second adhesion layer 10b are set to be thicknesses at the thinnest location of each part when the adhesion layer 10 is viewed in cross section.

The thickness of the first adhesion layer 10a is preferably 1 µm or more and 2 mm or less, more preferably 10 µm or more and 1 mm or less, still more preferably 50 µm or more and 500 µm or less, particularly preferably 100 µm or more and 300 µm or less. This is because the adhesion layer 10 capable of being more stably reduced in adhesive strength after the application of the electric pulse is obtained.

The thickness of the second adhesion layer 10b may be any thickness as long as the adhesion layer 10 capable of being stably reduced in adhesive strength after the application of the electric pulse can be obtained. The thickness of the second adhesion layer 10b is preferably 1 µm or more and 2 mm or less, more preferably 10 µm or more and 1 mm or less, still more preferably 50 µm or more and 500 µm or less, particularly preferably 100 µm or more and 300 µm or less. This is because an adhesion layer 10 capable of being more stably reduced in adhesive strength after the application of the electric pulse is obtained.

### A-3. Material for forming Adhesion Layer

The first adhesion layer 10a and the second adhesion layer 10b may each be any layer as long as the adhesion layer 10 that can be stably reduced in adhesive strength after the application of the electric pulse can be obtained. However, it is preferred that the layers each comprise a cured product of a resin component, and it is more preferred that the first adhesion layer 10a comprise a cured product of a resin component and a conductive material, and the second adhesion layer 10b comprise a cured product of a resin component. This is because when a curable composition comprising a resin component is applied in a pattern to the respective formation locations of the first adhesion layer 10a and the second adhesion layer 10b, and the composition is cured, the first adhesion layer 10a and the second adhesion layer 10b can each be easily formed in a desired shape at a desired position. In addition, this is because the adhesion layer 10 having an excellent adhesive strength in a state before the application of the electric pulse can be easily formed.

A material for forming the first adhesion layer 10a may be any material as long as the first adhesion layer 10a having a desired dielectric strength can be formed. However, the first adhesion layer 10a preferably comprises a conductive material and a cured product of a resin component. This is because the first adhesion layer 10a can be easily formed by using a curable composition comprising a conductive material and a resin component.

Examples of the resin component comprise an epoxy-based resin, an acrylic resin, and a urethane-based resin. This is because the formation of the first adhesion layer 10a becomes easy. In addition, this is because an adhesion layer having an excellent adhesive strength in a state before the application of an electric pulse can be easily obtained.

In this disclosure, the resin component may be any component as long as the adhesion layer 10 that can be stably reduced in adhesive strength after the application of the electric pulse can be obtained. However, the resin component preferably comprises an epoxy-based resin, a urethane-based resin, or the like, more preferably comprises an epoxy-based resin, and still more preferably comprises both of an epoxy-based resin and a urethane-based resin. This is because the formation of the adhesion layer is easy, and hence the adhesion layer 10 having an excellent adhesive strength in a state before the application of the electric pulse can be easily obtained.

The content of the resin component may be any content as long as the adhesion layer 10 that can be stably reduced in adhesive strength after the application of the electric pulse can be obtained. However, the content is preferably 50 parts by mass or more, more preferably 70 parts by mass or more and 99 parts by mass or less, still more preferably 5 parts by mass or more and 95 parts by mass or less, particularly preferably 80 parts by mass or more and 90 parts by mass or less in 100 parts by mass of the first adhesion layer 10a. This is because the adhesion layer 10 is easily formed, and hence the adhesion layer 10 having an excellent adhesive strength in a state before the application of the electric pulse can be easily obtained.

When a plurality of resin components are incorporated, the content of the resin component may be the total of the resin components incorporated into the first adhesion layer 10a.

When the first adhesion layer 10a comprises the resin component as a cured product of the resin component, the content of the resin component may be the total of components derived from the resin component in the cured product.

When the resin component comprises an epoxy-based resin, the content of the epoxy-based resin may be any content as long as the adhesion layer 10 capable of being stably reduced in adhesive strength after the application of the electric pulse can be obtained. The content of the epoxy-based resin is preferably 40 parts by mass or more, more preferably 50 parts by mass or more and 90 parts by mass or less, still more preferably 60 parts by mass or more and 80 parts by mass or less, particularly preferably 65 parts by mass or more and 75 parts by mass or less in 100 parts by mass of the first adhesion layer 10a. This is because the first adhesion layer 10a is easily formed, and hence the adhesion layer 10 having an excellent adhesive strength in a state before the application of the electric pulse can be easily obtained.

When the resin component comprises a urethane-based resin, the content of the urethane-based resin may be any content as long as the adhesion layer 10 capable of being stably reduced in adhesive strength can be obtained. The content of the urethane-based resin is preferably 1 part by mass or more, more preferably 5 parts by mass or more and 50 parts by mass or less, still more preferably 10 parts by mass or more and 30 parts by mass or less, particularly preferably 15 parts by mass or more and 25 parts by mass or less in 100 parts by mass of the first adhesion layer 10a. This is because the adhesion layer 10 is easily formed, and hence the adhesion layer 10 having an excellent adhesive strength in a state before the application of the electric pulse can be easily obtained.

A method of forming the first adhesion layer 10a is, for example, a method comprising the steps of: applying a first curable composition comprising a conductive material and a resin component to a formation region of the first adhesion layer 10a; and curing the first curable composition.

The conductive material may be any material as long as a desired reduction in adhesive strength of the adhesion layer 10 is obtained after the application of the electric pulse, and examples thereof include a conductive carbon material, a metal material, and a metal-coated resin material.

In this disclosure, the conductive material is preferably a conductive carbon material or a metal material, more preferably a conductive carbon material. This is because the adhesion layer 10 capable of being more stably reduced in adhesive strength after the application of the electric pulse is obtained.

The content of the conductive material in vol% may be any content as long as a desired reduction in adhesive strength of the adhesion layer 10 is obtained after the application of the electric pulse. However, the content is preferably 0.03 vol% or more and 40 vol% or less, more preferably 0.1 vol% or more and 25 vol% or less, still more preferably 0.5 vol% or more and 15 vol% or less, particularly preferably 1 vol% or more and 10 vol% or less, most preferably 2.5 vol% or more and 5 vol% or less in the first adhesion layer 10a.

The content of the conductive material in part(s) by mass may be any content as long as a desired reduction in adhesive strength of the adhesion layer 10 is obtained after the application of the electric pulse. However, the content is preferably 0.05 part by mass or more and 40 parts by mass or less, preferably 0.1 part by mass or more and 35 parts by mass or less, more preferably 0.2 part by mass or more and 30 parts by mass or less, still more preferably 0.5 part by mass or more and 20 parts by mass or less, even still more preferably 1 part by mass or more and 20 parts by mass or less, particularly preferably 1.5 parts by mass or more and 10 parts by mass or less, most preferably 3 parts by mass or more and 8 parts by mass or less in 100 parts by mass of the first adhesion layer 10a.

This is because when the content falls within the above-mentioned ranges, the difference in dielectric strength between the first adhesion layer 10a and the second adhesion layer 10b can be easily adjusted, and hence the adhesive strength of the adhesion layer 10 after the application of the electric pulse can be more stably reduced. Further, this is because the adhesion layer 10 has an excellent adhesive strength before the application of the electric pulse.

A material for forming the second adhesion layer 10b may be any material as long as the second adhesion layer 10b having a desired dielectric strength can be formed. However, it is preferred that the second adhesion layer 10b be free of a conductive material or comprise a smaller amount of a conductive material than in the first adhesion layer 10a, and comprise a cured product of a resin component. This is because the second adhesion layer 10b can be easily formed by using a curable composition comprising a resin component, or a conductive material and a resin component.

The same component as that for the first adhesion layer 10a may be used as the resin component.

The content of the resin component is preferably 70 parts by mass or more, more preferably 75 parts by mass or more and 99 parts by mass or less, still more preferably 80 parts by mass or more and 95 parts by mass or less, particularly preferably 85 parts by mass or more and 92 parts by mass or less in 100 parts by mass of the second adhesion layer 10b.

When the second curable composition comprises a plurality of resin components, the content of the resin component may be the total of the resin components in the second adhesion layer 10b.

When the resin component comprises an epoxy-based resin to be described later, the content of the epoxy-based resin may be any content as long as the adhesion layer 10 capable of being stably reduced in adhesive strength after the application of the electric pulse can be obtained. The content is preferably 40 parts by mass or more, more preferably 50 parts by mass or more and 90 parts by mass or less, still more preferably 60 parts by mass or more and 80 parts by mass or less, particularly preferably 65 parts by mass or more and 75 parts by mass or less in 100 parts by mass of the second adhesion layer 10b. This is because the adhesion layer 10 is easily formed, and hence the adhesion layer 10 having an excellent adhesive strength in a state before the application of the electric pulse can be easily obtained.

When the resin component comprises a urethane-based resin to be described later, the content of the urethane-based resin may be any content as long as the adhesion layer 10 capable of being stably reduced in adhesive strength after the application of the electric pulse can be obtained. The content of the urethane-based resin is preferably 1 part by mass or more, more preferably 5 parts by mass or more and 50 parts by mass or less, still more preferably 10 parts by mass or more and 30 parts by mass or less, particularly preferably 15 parts by mass or more and 25 parts by mass or less in 100 parts by mass of the second adhesion layer 10b. This is because the adhesion layer 10 is easily formed, and hence the adhesion layer 10 having an excellent adhesive strength in a state before the application of the electric pulse can be easily obtained.

The same material as that for the first adhesion layer 10a may be used as the conductive material.

When the conductive material is the same material as the conductive material in the first adhesion layer 10a, the content of the conductive material may be less than the content of the conductive material in the first adhesion layer 10a.

The content of the conductive material is preferably 20 parts by mass or less, more preferably 10 parts by mass or less, still more preferably 5 parts by mass or less, even still more preferably 2 parts by mass or less, particularly preferably 1 part by mass or less in 100 parts by mass of the second adhesion layer 10b. It is most preferred that the content be 0 parts by mass, that is, the second adhesion layer 10b be free of the conductive material. This is because the difference in dielectric strength between the first adhesion layer 10a and second adhesion layer 10b can be easily increased, and hence a desired reduction in adhesive strength of the adhesion layer 10 can be more stably obtained after the application of the electric pulse.

A method of forming the second adhesion layer 10b may be any method as long as the second adhesion layer 10b having a desired dielectric strength can be formed. However, when the second adhesion layer 10b comprises a cured product of a resin component, the method is, for example, a method comprising the steps of: applying a second curable composition comprising a resin component to a formation region of the second adhesion layer 10b; and curing the second curable composition.

In the above-mentioned forming method, the step of curing the second curable composition may be performed simultaneously with the step of curing the first curable composition.

That is, the method of forming the adhesion layer 10 may be a method comprising the steps of: applying a first curable composition comprising a conductive material and a resin component to a formation region of the first adhesion layer 10a; applying a second curable composition that is free of a conductive material or comprises a smaller amount of a conductive material than in the first curable composition, and comprises a resin component to a formation region of the second adhesion layer 10b; and curing the first curable composition and second curable composition.

The first curable composition and the second curable composition for forming the first adhesion layer 10a and the second adhesion layer 10b are described in detail in the section "B. Curable Composition" to be described later.

The application region of each of the first curable composition and the second curable composition may be provided on the first member or the second member, the members being bonded by the adhesion layer 10, or may be provided on a substrate different from the first member and the second member to be bonded.

In this disclosure, the application region is preferably disposed on the first member or the second member. This is because the adhesion layer 10 is easily formed.

A method of applying the first curable composition and the second curable composition may be any method as long as the first adhesion layer 10a and the second adhesion layer 10b can be formed in a desired pattern, and examples thereof include a bar coating method, a knife coating method, a roll coating method, a blade coating method, a die coating method, a gravure coating method, a curtain coating method, and an inkjet method.

More specifically, the method of applying the first curable composition and the second curable composition may be a method comprising applying the compositions only to the formation regions of the first adhesion layer 10a and the second adhesion layer 10b, respectively, by using an inkjet method or the like, or may be a method comprising arranging a frame having an opening in the formation region of the first adhesion layer 10a, applying the first curable composition, then removing the frame, and then applying the second curable composition to the formation region of the second adhesion layer 10b. In addition, as illustrated in FIG. 2A and FIG. B described above, when the second adhesion layer 10b is formed so as to cover also the upper surface of the first adhesion layer 10a, the method may be a method comprising arranging a frame having an opening in the formation region of the first adhesion layer 10a, applying the first curable composition, then removing the frame, and then applying the second curable composition so as to cover both the regions of the formation region of the first adhesion layer 10a and the formation region of the second adhesion layer 10b.

The above-mentioned curing method may be any method as long as the first curable composition and the second curable composition can be cured, and the method varies depending on the kind of a resin component and the kind of a curing agent component or the like. When the resin component is an epoxy-based resin, a urethane-based resin, or the like, the above-mentioned curing method is preferably a method comprising heating.

The heating temperature is preferably 50°C or more and 250°C or less, more preferably 100°C or more and 220°C or less, still more preferably 150°C or more and 200°C or less.

### A-4. Applications of Adhesion Layer

An example of the application of the adhesion layer 10 is an application in which a member bonded by the adhesion layer 10 is taken out and desired to be used as a recycled product.

Examples of such application include bonding applications for home appliances, communication device terminals, toys, daily necessities, industrial devices, and automobile interior parts.

### B. Curable Composition

Next, the curable composition for forming the adhesion layer 10 is described.

The curable composition of this disclosure is used for forming the adhesion layer 10, and examples thereof include a curable composition for forming the first adhesion layer 10a (hereinafter sometimes referred to as "first curable composition") and a curable composition for forming the second adhesion layer 10b (hereinafter sometimes referred to as "second curable composition").

The curable composition of this disclosure is described separately below for the first curable composition and the second curable composition.

### B-1. First Curable Composition

The first curable composition of this disclosure is a curable composition for forming the first adhesion layer 10a.

Such first curable composition is not particularly limited as long as the first adhesion layer 10a can be formed. However, the composition preferably comprises a resin component and a conductive material.

That is, the first curable composition of this disclosure is a curable composition comprising a conductive material and a resin component, and is preferably used for forming the first adhesion layer 10a of the adhesion layer 10 that comprises the first adhesion layer 10a and the second adhesion layer 10b having a dielectric strength higher than that of the first adhesion layer 10a, and is used for electric pulse peeling. This is because the first adhesion layer 10a can be easily formed.

The resin component to be used in the first curable composition refers to a component that can achieve a high molecular weight by resin components reacting directly with each other, or by resin components reacting with each other via a curing agent component, such as a curing agent, a curing catalyst, or a polymerization initiator.

Examples of such resin component include an epoxy-based resin, an acrylic resin, and a urethane-based resin. This is because the adhesion layer 10 is easily formed. In addition, this is because the adhesion layer 10 having an excellent adhesive strength in a state before the application of the electric pulse can be easily obtained.

In this disclosure, the resin component may be any component as long as the adhesion layer 10 capable of being stably reduced in adhesive strength after the application of the electric pulse can be obtained. However, the resin component preferably comprises an epoxy-based resin, a urethane-based resin, or the like, more preferably comprises an epoxy-based resin, and still more preferably comprises both of an epoxy-based resin and a urethane-based resin. This is because the adhesion layer 10 is easily formed, and hence the adhesion layer 10 having an excellent adhesive strength in a state before the application of the electric pulse can be easily obtained.

The epoxy equivalent of the epoxy-based resin may be any value as long as the adhesion layer 10 capable of being stably reduced in adhesive strength after the application of the electric pulse can be obtained. The epoxy equivalent is preferably 50 g/eq or more and 5,000 g/eq or less, more preferably 100 g/eq or more and 3,000 g/eq or less, still more preferably 150 g/eq or more and 1,500 g/eq or less. This is because the adhesion layer 10 is easily formed, and hence the adhesion layer 10 having an excellent adhesive strength in a state before the application of the electric pulse can be easily obtained.

Examples of the epoxy-based resin include an epoxy compound having an epoxy group, and a modified epoxy compound obtained by modifying an epoxy compound.

The epoxy-based resin may be any resin as long as the adhesion layer 10 capable of being stably reduced in adhesive strength after the application of the electric pulse can be obtained. However, the epoxy-based resin preferably comprises an epoxy compound, and more preferably comprises an epoxy compound and a modified epoxy compound. This is because the adhesion layer 10 is easily formed, and hence the adhesion layer 10 having an excellent adhesive strength in a state before the application of the electric pulse can be easily obtained.

Examples of such epoxy compound include a monoglycidyl ether compound, a monoglycidyl ester compound, a polyglycidyl ether compound of a mononuclear polyhydric phenol compound, a polyglycidyl ether compound of a polynuclear polyhydric phenol compound or an alkylene oxide adduct of the polynuclear polyhydric phenol compound, a polyglycidyl ether of a polyhydric alcohol, a glycidyl ester of an aliphatic, aromatic, or alicyclic polybasic acid, a homopolymer or copolymer of glycidyl methacrylate, an epoxidized product of a cyclic olefin compound, an epoxidized conjugated diene polymer, and a heterocyclic compound.

Examples of the polynuclear polyhydric phenol compound include a compound having a naphthalene structure, a compound having a biphenol structure, a compound having a bisphenol structure, and a novolac-type phenol resin.

An example of the compound having a naphthalene structure is dihydroxynaphthalene.

An example of the compound having a biphenol structure is biphenol.

Examples of the compound having a bisphenol structure serving as a compound in which two hydroxyphenyl groups are bonded by one atom include: methylenebisphenol (bisphenol F) and methylenebis(orthocresol); ethylidenebisphenol; compounds each having a bisphenol A structure, such as isopropylidenebisphenol (bisphenol A), isopropylidenebis (orthocresol), and tetrabromobisphenol A; and 1,1,3-tris(4-hydroxyphenyl)butane, 1,1,2,2-tetra(4-hydroxyphenyl) ethane, thiobisphenol, sulfobisphenol, and oxybisphenol. The phrase "two hydroxyphenyl groups are bonded by one atom" indicates that the linking chain length of a linking group for linking the benzene rings of two hydroxyphenyl groups is one atom. The term "bisphenol A structure" refers to a structure in which two hydroxyphenyl groups are bonded by an isopropylidene group at benzene rings, and a polyglycidyl etherified product of a polyhydric phenol compound having the structure encompasses a so-called bisphenol A-type epoxy resin.

In addition, examples of a compound having a bisphenol structure in which two hydroxyphenyl groups are bonded by two or more atoms include 1,3-bis(4-hydroxycumylbenzene) and 1,4-bis(4-hydroxycumylbenzene).

Examples of the novolac-type phenol resin include phenol novolac, ortho-cresol novolac, ethylphenol novolac, butylphenol novolac, octylphenol novolac, resorcin novolac, and terpene phenol.

Examples of an alkylene oxide for forming the alkylene oxide adduct of the polynuclear polyhydric phenol compound include ethylene oxide and propylene oxide.

Examples of the monoglycidyl ether compound include: monoglycidyl ether compounds, such as phenyl glycidyl ether, allyl glycidyl ether, methyl glycidyl ether, butyl glycidyl ether, sec-butyl glycidyl ether, 2-ethylhexyl glycidyl ether, 2-methyloctyl glycidyl ether, and stearyl glycidyl ether; and glycidyl versatate.

Examples of the mononuclear polyhydric phenol compound include hydroquinone, resorcinol, pyrocatechol, and phloroglucinol.

Examples of the polyhydric alcohol include ethylene glycol, propylene glycol, butylene glycol, hexanediol, polyglycol, thiodiglycol, glycerin, trimethylolpropane, pentaerythritol, and sorbitol.

Examples of an aliphatic, aromatic, or alicyclic polybasic acid for forming the glycidyl ester of an aliphatic, aromatic, or alicyclic polybasic acid and the homopolymer or copolymer of glycidyl methacrylate include maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylenetetrahydrophthalic acid.

Examples of the epoxidized product of a cyclic olefin compound include vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, and bis(3,4-epoxy-6-methylcyclohexylmethyl) adipate.

Examples of the epoxidized conjugated diene polymer include an epoxidized polybutadiene and an epoxidized styrenebutadiene copolymer.

An example of the heterocyclic compound is triglycidyl isocyanurate.

In this disclosure, the epoxy compound preferably comprises a polyglycidyl ether compound of a polynuclear polyhydric phenol compound or an alkylene oxide adduct thereof, or a polyglycidyl ether of a polyhydric alcohol, more preferably comprises a polyglycidyl ether compound of a polynuclear polyhydric phenol compound or an alkylene oxide adduct thereof, still more preferably comprises a polyglycidyl ether compound of a polynuclear polyhydric phenol compound, even still more preferably comprises a bisphenol-type epoxy compound that is a polyglycidyl ether compound of a bisphenol compound, and particularly preferably comprises a bisphenol A-type epoxy compound that is a polyglycidyl ether compound of bisphenol A. This is because the formation of the adhesion layer 10 becomes easy. In addition, this is because the adhesion layer 10 having an excellent adhesive strength in a state before the application of the electric pulse can be easily obtained.

The modified epoxy compound may be any compound obtained by modifying the epoxy compound described above, and examples thereof include a urethane-modified epoxy resin modified with a urethane, a chelate-modified epoxy resin modified with phosphoric acid, and a rubber-modified epoxy resin modified to comprise a rubber component.

In this disclosure, the modified epoxy compound may be any compound as long as the adhesion layer 10 capable of being stably reduced in adhesive strength after the application of the electric pulse can be obtained. However, the modified epoxy compound preferably comprises a chelate-modified epoxy resin and a rubber-modified epoxy resin. This is because the formation of the adhesion layer 10 becomes easy. In addition, this is because the adhesion layer 10 having an excellent adhesive strength in a state before the application of the electric pulse can be easily obtained.

The chelate-modified epoxy resin is a resin modified by using phosphoric acid, and specific examples thereof include a resin obtained by causing an epoxy compound and phosphoric acid to react with each other, and a chelate urethane-modified epoxy resin obtained by causing an epoxy compound, phosphoric acid, and a polyurethane having an isocyanate group to react with each other.

An example of the rubber-modified epoxy resin is a resin comprising a rubber component obtained by: homopolymerizing each component, such as isoprene rubber, butadiene, styrene, acrylonitrile, or chloroprene, serving as a rubber component; or copolymerizing two or more kinds of components, the resin having an epoxy group at a terminal.

The urethane-modified epoxy resin is obtained by causing an epoxy compound having at least one hydroxy group in a molecule thereof and a polyurethane in which an isocyanate group remains to react with each other, and the polyurethane is obtained by causing a polyhydroxy compound and a polyisocyanate compound to react with each other. At the time of the reaction, an excessive amount of the polyisocyanate compound may be used with respect to the polyhydroxy compound.

A method of producing the epoxy compound having at least one hydroxy group is not particularly limited, but an example thereof is a method comprising a reaction using 1 equivalent to 10 equivalents of epichlorohydrin with respect to 1 equivalent of a hydroxy group of a polyol having at least two hydroxy groups, and an alkali metal hydroxide such as sodium hydroxide in combination, at from 40°C to 150°C for from 1 hour to 20 hours.

The polyol having at least two hydroxy groups is not particularly limited, but examples thereof include polyphenols, aliphatic polyols, and alicyclic polyols.

Examples of the polyphenols include bisphenol A, bisphenol F, tetrabromobisphenol A, phenol novolac, brominated phenol novolac, cresol novolac, brominated cresol novolac, 4,4'-dihydroxybiphenyl, and 1,1,2,2-tetrakis(hydroxyphenyl)ethane.

Examples of the aliphatic polyols include: polyhydric alcohols, such as ethylene glycol and propylene glycol; linear or branched low-molecular polyols, such as butanediol, pentanediol, hexanediol, octanediol, decanediol, glycerin, trimethylolpropane, trimethylolethane, pentaerythritol, dipentaerythritol, and neopentyl glycol; and ethylene oxide adducts or propylene oxide adducts thereof.

Examples of the alicyclic polyols include cyclohexanediol, cyclohexanetriol, cyclohexanedimethanol, isopropylidenedicyclohexanol, decalindiol, and tricyclodecane dimethanol.

Of the polyols each having at least two hydroxy groups described above, a polyphenol having high reactivity and being easy to produce is preferably used, and bisphenol A and/or bisphenol F available at low cost is more preferably used.

Examples of the polyhydroxy compound to be used for producing the polyurethane include a polyether polyol, a polyester polyol, a polycarbonate polyol, a polyesteramide polyol, an acrylic polyol, and a polyurethane polyol.

An alkylene oxide adduct of a polyol is preferably used as the polyether polyol, and the alkylene oxide preferably has 2 to 4 carbon atoms.

Examples of the polyol to be used for producing the polyether polyol include: aliphatic dihydric alcohols, such as ethylene glycol, propylene glycol, 1,4-butylene glycol (tetramethylene glycol), and neopentane glycol; trihydric alcohols, such as glycerin, trioxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerin, pentaglycerin, 1,2,4-butanetriol, 1,2,4-pentanetriol, and trimethylolpropane; tetrahydric alcohols, such as erythritol, pentaerythritol, 1,2,3,4-pentanetetrol, 2,3,4,5-hexanetetrol, 1,2,3,5-pentanetetrol, and 1,3,4,5-hexanetetrol; pentahydric alcohols, such as adonitol, arabitol, and xylitol; and hexahydric alcohols, such as sorbitol, mannitol, and iditol.

Of those, dihydric alcohols to tetrahydric alcohols are preferred as the polyhydric alcohols, and propylene glycol, 1,4-butylene glycol, and glycerin are particularly preferred.

Examples of the alkylene oxide for forming the polyether polyol include ethylene oxide, propylene oxide, and butylene oxide (tetramethylene oxide). Of those, propylene oxide and butylene oxide are particularly preferred.

Examples of the polyester polyol include a hitherto known polyester to be produced from a polycarboxylic acid and a polyhydric alcohol, and a polyester obtained from a lactone.

Examples of the polycarboxylic acid to be used for producing the polyester polyol include benzenetricarboxylic acid, adipic acid, succinic acid, suberic acid, sebacic acid, oxalic acid, methyladipic acid, glutaric acid, pimelic acid, azelaic acid, phthalic acid, terephthalic acid, isophthalic acid, thiodipropionic acid, maleic acid, fumaric acid, citraconic acid, and itaconic acid.

Examples of the polyol to be used for producing the polyester polyol include ethylene glycol, propylene glycol, 1,4-butanediol, 1,3-butanediol, 1,5-pentanediol, 1,6-hexanediol, bis(hydroxymethylchlorohexane), diethylene glycol, 2,2-dimethyl propylene glycol, 1,3,6-hexanetriol, trimethylolpropane, pentaerythritol, sorbitol, and glycerin. Polyhydroxy compounds, such as polytetramethylene glycol and polycaprolactone glycol, may each be used as the polyol through partial replacement, in addition to the above-mentioned polyols.

Examples of the polycarbonate polyol include: a product obtained through a dephenolization reaction between a diol and a diphenyl carbonate; a product obtained through a dealcoholization reaction between a diol and a dialkyl carbonate; and a product obtained through a deglycolation reaction between a diol and an alkylene carbonate. Examples of the diol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol, and 3,3-dimethylolheptane.

Examples of the polyisocyanate compound to be used for producing the polyurethane include propane-1,2-diisocyanate, 2,3-dimethylbutane-2,3-diisocyanate, 2-methylpentane-2,4-diisocyanate, octane-3,6-diisocyanate, 3,3-dinitropentane-1,5-diisocyanate, octane-1,6-diisocyanate, 1,6-hexamethylene diisocyanate (HDI), trimethylhexamethylene diisocyanate, lysine diisocyanate, tolylene diisocyanate (TDI), xylylene diisocyanate, metatetramethylxylylene diisocyanate, isophorone diisocyanate (3-isocyanatomethyl-3,5,5-trimethylcyclohexyl isocyanate), 1,3- or 1,4-bis(isocyanatomethyl)cyclohexane, diphenylmethane-4,4'-diisocyanate (MDI), dicyclohexylmethane-4,4'-diisocyanate (hydrogenated MDI), hydrogenated tolylene diisocyanate, and mixtures thereof. Those polyisocyanate compounds may each be an isocyanurate form obtained through trimerization.

Examples of the urethane-based resin include polyurethane and a blocked urethane resin.

The polyurethane is obtained by causing the polyhydroxy compound and the polyisocyanate compound to react with each other as described above. The same compounds as those described for the urethane-modified epoxy resin may be used as the polyhydroxy compound and the isocyanate compound to be used in the production of the polyurethane.

In addition, the production of the polyurethane comprising causing the polyhydroxy compound and the polyisocyanate compound to react with each other may be performed by an ordinary method.

A blocked urethane resin obtained by blocking a polyurethane, which is obtained by causing the polyhydroxy compound and an excessive amount of the polyisocyanate compound to react with each other, and has an isocyanate (NCO) content of from 0.1 mass% to 10 mass%, with a blocking agent is preferably used as the blocked urethane resin.

Examples of the blocking agent include: active methylene compounds, such as a malonic acid diester (e.g., diethyl malonate), acetylacetone, and an acetoacetic acid ester (e.g., ethyl acetoacetate); oxime compounds, such as acetoxime, methyl ethyl ketoxime (MEK oxime), and methyl isobutyl ketoxime (MIBK oxime); monohydric alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, and stearyl alcohol, or isomers thereof; glycol derivatives, such as ethylene glycol monomethyl ether, ethylene glycol monoethyl ether, ethyldiglycol, ethyltriglycol, ethylene glycol monobutyl ether, and butyldiglycol; amine compounds such as dicyclohexylamine; phenols, such as phenol, cresol, ethylphenol, n-propylphenol, isopropylphenol, butylphenol, tertiary butylphenol, octylphenol, nonylphenol, dodecylphenol, cyclohexylphenol, chlorophenol, bromophenol, resorcin, catechol, hydroquinone, bisphenol A, bisphenol S, bisphenol F, and naphthol; and ε-caprolactone and ε-caprolactam.

A blocking reaction for obtaining a blocked polyurethane from the polyurethane and the blocking agent may be performed by a known reaction method.

A blocked isocyanate resin obtained by modifying the polyisocyanate compound (particularly, an isocyanurate form) with the blocking agent may be used as the blocked urethane resin in addition to the blocked urethane resin obtained by causing the polyurethane and the blocking agent to react with each other.

The blocked NCO equivalent of the blocked urethane resin may be any value as long as the adhesion layer 10 capable of being stably reduced in adhesive strength after the application of the electric pulse can be obtained. The blocked NCO equivalent is preferably 300 g/eq or more and 5,000 g/eq or less, more preferably 500 g/eq or more and 3,000 g/eq or less, still more preferably 1,000 g/eq or more and 2,000 g/eq or less. This is because the adhesion layer 10 is easily formed, and hence the adhesion layer 10 having an excellent adhesive strength in a state before the application of the electric pulse can be easily obtained.

A known material may be used as the acrylic resin, and the material may be, for example, the same as the content described in WO 2023/136299 A1.

The content of the epoxy-based resin may be any content as long as the adhesion layer 10 capable of being stably reduced in adhesive strength after the application of the electric pulse can be obtained. The content of the epoxy-based resin is preferably 40 parts by mass or more, more preferably 50 parts by mass or more and 90 parts by mass or less, still more preferably 60 parts by mass or more and 80 parts by mass or less, particularly preferably 65 parts by mass or more and 75 parts by mass or less in 100 parts by mass of the first curable composition. This is because the adhesion layer 10 is easily formed, and hence the adhesion layer 10 having an excellent adhesive strength in a state before the application of the electric pulse can be easily obtained.

When the epoxy-based resin comprises both of an epoxy compound and a modified epoxy compound, the content of the epoxy compound may be any content as long as the adhesion layer 10 capable of being stably reduced in adhesive strength after the application of the electric pulse can be obtained. The content of the epoxy compound is preferably 20 parts by mass or more and 90 parts by mass or less, more preferably 40 parts by mass or more and 90 parts by mass or less, still more preferably 50 parts by mass or more and 80 parts by mass or less, particularly preferably 55 parts by mass or more and 70 parts by mass or less in 100 parts by mass of the epoxy-based resin. This is because the adhesion layer 10 is easily formed, and hence the adhesion layer 10 having an excellent adhesive strength in a state before the application of the electric pulse can be easily obtained.

The content of the urethane-based resin may be any content as long as the adhesion layer 10 capable of being stably reduced in adhesive strength after the application of the electric pulse can be obtained. The content of the urethane-based resin is preferably 1 part by mass or more, more preferably 5 parts by mass or more and 50 parts by mass or less, still more preferably 10 parts by mass or more and 30 parts by mass or less, particularly preferably 15 parts by mass or more and 25 parts by mass or less in 100 parts by mass of the first curable composition. This is because the adhesion layer 10 is easily formed, and hence the adhesion layer 10 having an excellent adhesive strength in a state before the application of the electric pulse can be easily obtained.

The first curable composition preferably comprises a curing agent component, such as a curing agent, a curing catalyst, or a polymerization initiator, for forming a cured product of the resin component.

Examples of the curing agent include a latent curing agent and other curing agents.

In this disclosure, the curing agent preferably comprises a latent curing agent. This is because the resin component can be easily cured at a desired timing.

At least one of compound selected from the group consisting of: dicyandiamide; modified polyamine; hydrazides; 4,4'-diaminodiphenylsulfone; boron trifluoride amine complex salts; ureas; and melamine may be used as the latent curing agent.

In this disclosure, the latent curing agent preferably comprises dicyandiamide. This is because the adhesion layer 10 is easily formed, and hence the adhesion layer 10 having an excellent adhesive strength in a state before the application of the electric pulse can be easily obtained.

Examples of the modified polyamine include epoxy addition modified products of amines, amidation modified products of amines, acrylic acid ester-modified products of amines, isocyanate-modified products of amines, and Mannich-modified products of amines.

Examples of the amines for providing the modified polyamine include: aliphatic polyamines, such as ethylenediamine, diethylenetriamine, triethylenetetramine, tetraethylenepentamine, polyoxypropylenediamine, and polyoxypropylenetriamine; alicyclic polyamines, such as isophoronediamine, menthane diamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-2,4,8,10-tetraoxaspiro(5.5)undecane; mononuclear polyamines, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, and 3,5-diethyltolylene-2,6-diamine; aromatic polyamines, such as biphenylenediamine, 4,4-diaminodiphenylmethane, 2,5-naphthylenediamine, and 2,6-naphthylenediamine; and imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole.

Any known curing agent may be used as the other curing agent without any particular limitation, and examples thereof include phenol resins, aliphatic amines, aromatic amines, acid anhydrides, and polythiol compounds.

The blending amount of the curing agent is preferably 1 part by mass or more and 100 parts by mass or less, more preferably 2 parts by mass or more and 50 parts by mass or less, still more preferably 3 parts by mass or more and 20 parts by mass or less, particularly preferably 4 parts by mass or more and 10 parts by mass or less with respect to 100 parts by mass of the resin component. This is because the adhesion layer 10 is easily formed, and hence the adhesion layer 10 having an excellent adhesive strength in a state before the application of the electric pulse can be easily obtained.

Examples of the curing catalyst include: phosphines such as triphenylphosphine; phosphonium salts such as tetraphenylphosphonium bromide; imidazoles, such as 2-methylimidazole, 2-phenylimidazole, 2-ethyl-4-methylimidazole, 2-undecylimidazole, 1-cyanoethyl-2-methylimidazole, and imidazole silane (e.g., 2MUSIZ manufactured by Shikoku Chemicals Corporation); imidazole salts that are salts of the imidazoles, with trimellitic acid, isocyanuric acid, and boron; amines, such as benzyldimethylamine and 2,4,6-tris(dimethylaminomethyl)phenol; quaternary ammonium salts such as trimethylammonium chloride; ureas, such as 3-(p-chlorophenyl)-1,1-dimethylurea, 3-(3,4-dichlorophenyl)-1,1-dimethylurea, 3-phenyl-1,1-dimethylurea (1,1-dimethyl-3-phenylurea), isophorone diisocyanate-dimethylurea, and tolylene diisocyanate-dimethylurea; and complex compounds between boron trifluoride, and amines and ether compounds. Those curing catalysts may be used alone or in combination thereof.

In this disclosure, the curing catalyst preferably comprises a urea.

The blending amount of the curing catalyst is preferably 0.1 part by mass or more and 15 parts by mass or less, more preferably 0.3 part by mass or more and 5 parts by mass or less, still more preferably 0.5 part by mass or more and 3 parts by mass or less with respect to 100 parts by mass of the resin component from the viewpoint of the adhesive strength of the adhesion layer 10 before the application of the electric pulse. This is because the adhesion layer 10 is easily formed, and hence the adhesion layer 10 having an excellent adhesive strength in a state before the application of the electric pulse can be easily obtained.

The conductive material in the first curable composition may be any material as long as a desired reduction in adhesive strength of the adhesion layer 10 is obtained after the application of the electric pulse, and examples thereof include a conductive carbon material, a metal material, and a metal-coated resin material.

In this disclosure, the conductive material is preferably a conductive carbon material or a metal material, more preferably a conductive carbon material. This is because the adhesion layer 10 capable of being more stably reduced in adhesive strength after the application of the electric pulse is obtained.

Examples of the conductive carbon material include carbon black, graphene, and a carbon nanotube (CNT).

Examples of the metal material include copper, silver, nickel, silver-coated copper, gold-coated copper, silver-coated nickel, and gold-coated nickel.

An example of the metal-coated resin material is a material in which resin particles, such as acrylic resin particles or urethane-based resin particles, are each coated with a metal material, such as copper, silver, nickel, or gold.

The particle diameter of the conductive material may be any diameter as long as a desired reduction in adhesive strength of the adhesion layer 10 is obtained after the application of the electric pulse. The particle diameter of the conductive material is preferably 0.01 µm or more and 1,000 µm or less, more preferably 0.015 µm or more and 500 µm or less, still more preferably 0.02 µm or more and 250 µm or less, even still more preferably 0.025 µm or more and 50 µm or less, particularly preferably 0.03 µm or more and 1 µm or less, most preferably 0.035 µm or more and 0.1 µm or less. This is because when the particle diameter falls within the above-mentioned ranges, the difference in dielectric strength between the first adhesion layer 10a and the second adhesion layer 10b can be easily adjusted, and hence the adhesive strength of the adhesion layer 10 can be more stably reduced after the application of the electric pulse. In addition, this is because the first adhesion layer 10a can be easily formed at a desired position.

The particle diameter represents D50 on a volume basis, and may be measured with a particle diameter distribution measuring apparatus using laser diffraction.

In addition, the particle diameter of the conductive material may be any diameter as long as a desired reduction in adhesive strength of the adhesion layer 10 is obtained after the application of the electric pulse. The particle diameter of the conductive material is preferably 90 or less, more preferably 0.001 or more and 50 or less, still more preferably 0.003 or more and 5 or less, even still more preferably 0.005 or more and 1 or less, particularly preferably 0.01 or more and 0.5 or less, most preferably 0.015 or more and 0.1 or less with respect to the thickness of the adhesion layer 10 defined as 100. This is because when the particle diameter falls within the above-mentioned ranges, the difference in dielectric strength between the first adhesion layer 10a and the second adhesion layer 10b can be easily adjusted, and hence the adhesive strength of the adhesion layer 10 can be more stably reduced after the application of the electric pulse. In addition, this is because the first adhesion layer 10a can be easily formed at a desired position.

The content of the conductive material in vol% may be any content as long as a desired reduction in adhesive strength of the adhesion layer 10 is obtained after the application of the electric pulse. However, the content is preferably 0.03 vol% or more and 40 vol% or less, more preferably 0.1 vol% or more and 25 vol% or less, still more preferably 0.5 vol% or more and 15 vol% or less, particularly preferably 1 vol% or more and 10 vol% or less, most preferably 2.5 vol% or more and 5 vol% or less in the first curable composition.

The content of the conductive material in part(s) by mass may be any content as long as a desired reduction in adhesive strength of the adhesion layer 10 is obtained after the application of the electric pulse. However, the content is preferably 0.05 part by mass or more and 40 parts by mass or less, preferably 0.1 part by mass or more and 35 parts by mass or less, more preferably 0.2 part by mass or more and 30 parts by mass or less, still more preferably 0.5 part by mass or more and 20 parts by mass or less, even still more preferably 1 part by mass or more and 20 parts by mass or less, particularly preferably 1.5 parts by mass or more and 10 parts by mass or less, most preferably 3 parts by mass or more and 8 parts by mass or less in 100 parts by mass of the first curable composition.

This is because when the content falls within the above-mentioned ranges, the difference in dielectric strength between the first adhesion layer 10a and the second adhesion layer 10b can be easily adjusted, and hence the adhesive strength of the adhesion layer 10 can be more stably reduced after the application of the electric pulse. In addition, this is because the first adhesion layer 10a can be easily formed at a desired position by using the first curable composition. Further, this is because the adhesion layer 10 has an excellent adhesive strength before the application of the electric pulse.

The first curable composition may comprise any other component except the resin component, the curing agent component, the conductive material, and the like.

For example, the following commonly used additives may each be incorporated as such other component: water adsorbents such as calcium oxide; non-reactive diluents (plasticizers), such as dioctyl phthalate, dibutyl phthalate, benzyl alcohol, and coal tar; fibrous fillers, such as a glass fiber, a pulp fiber, a synthetic fiber, and a ceramic fiber; reinforcing materials, such as a glass cloth, an aramid cloth, and a carbon fiber; pigments; silane coupling agents, such as γ-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, and γ-mercaptopropyltrimethoxysilane; lubricants, such as candelilla wax, carnauba wax, Japan wax, Chinese wax, bees wax, lanolin, spermaceti wax, montan wax, petroleum wax, aliphatic wax, an aliphatic ester, an aliphatic ether, an aromatic ester, and an aromatic ether; thickeners; thixotropic agents; antioxidants; light stabilizers; UV absorbers; flame retardants; defoaming agents; rust inhibitors; and colloidal silica and colloidal alumina. Further, tackifying resins, such as a xylene resin and a petroleum resin, may each be used in combination therewith.

A method of preparing the first curable composition may be any method as long as the conductive material and the resin component can be mixed. Such mixing method is not particularly limited, and a general method comprising using a roll-type kneader or the like may be used.

### B-2. Second Curable Composition

The second curable composition of this disclosure is a curable composition for forming the second adhesion layer 10b.

Such second curable composition is not particularly limited as long as the second adhesion layer 10b having a dielectric strength higher than that of the first adhesion layer 10a can be formed. However, it is preferred that the composition be free of a conductive material or comprise a smaller amount of a conductive material than in the first curable composition, and comprise a resin component.

That is, the second curable composition of this disclosure is a curable composition comprising a resin component, and is preferably used for forming the second adhesion layer 10b of the adhesion layer 10 that comprises the first adhesion layer 10a and the second adhesion layer 10b having a dielectric strength higher than that of the first adhesion layer 10a, and is used for electric pulse peeling.

The resin component to be used for the second curable composition may be the same as the resin component to be used for the first curable composition.

The content of the resin component is preferably 70 parts by mass or more, more preferably 75 parts by mass or more and 99 parts by mass or less, still more preferably 80 parts by mass or more and 95 parts by mass or less, particularly preferably 85 parts by mass or more and 92 parts by mass or less in 100 parts by mass of the second curable composition.

When the second curable composition comprises a plurality of resin components, the content of the resin component may be the total of the resin components in the second cured product.

When the resin component comprises an epoxy-based resin, the content of the epoxy-based resin may be any content as long as the adhesion layer 10 capable of being stably reduced in adhesive strength after the application of the electric pulse can be obtained. The content of the epoxy-based resin is preferably 40 parts by mass or more, more preferably 50 parts by mass or more and 90 parts by mass or less, still more preferably 60 parts by mass or more and 80 parts by mass or less, particularly preferably 65 parts by mass or more and 75 parts by mass or less in 100 parts by mass of the second curable composition. This is because the adhesion layer 10 is easily formed, and hence the adhesion layer 10 having an excellent adhesive strength in a state before the application of the electric pulse can be easily obtained.

When the resin component comprises a urethane-based resin, the content of the urethane-based resin may be any content as long as the adhesion layer 10 capable of being stably reduced in adhesive strength after the application of the electric pulse can be obtained. The content of the urethane-based resin is preferably 1 part by mass or more, more preferably 5 parts by mass or more and 50 parts by mass or less, still more preferably 10 parts by mass or more and 30 parts by mass or less, particularly preferably 15 parts by mass or more and 25 parts by mass or less in 100 parts by mass of the second curable composition. This is because the adhesion layer 10 is easily formed, and hence the adhesion layer 10 having an excellent adhesive strength in a state before the application of the electric pulse can be easily obtained.

The second curable composition may comprise a conductive material within such a range that the second adhesion layer 10b has a dielectric strength higher than that of the first adhesion layer 10a.

When the conductive material is the same material as the conductive material in the first curable composition, the content of the conductive material may be less than the content of the conductive material in the first curable composition.

The content of the conductive material is preferably 20 parts by mass or less, more preferably 10 parts by mass or less, still more preferably 5 parts by mass or less, even still more preferably 2 parts by mass or less, particularly preferably 1 part by mass or less in 100 parts by mass of the second curable composition. It is most preferred that the content be 0 parts by mass, that is, the second curable composition be free of the conductive material. This is because the difference in dielectric strength between the first adhesion layer 10a and second adhesion layer 10b can be easily increased, and hence a desired reduction in adhesive strength of the adhesion layer 10 can be more stably obtained after the application of the electric pulse.

The second curable composition may comprise a curing agent component, any other component, or the like as a component except the resin component and the conductive material.

The contents of such respective components may be the same as those used in the first curable composition.

### B-3. Set of Curable Compositions

The first curable composition and the second curable composition, which are the curable compositions of this disclosure, may be used as a set.

Such set of curable compositions is not particularly limited as long as the adhesion layer 10 can be formed. However, the set is preferably a set of curable compositions used for electric pulse peeling, the set comprising: a first curable composition comprising a conductive material and a resin component; and a second curable composition that is free of the conductive material or comprises a smaller amount of the conductive material than in the first curable composition, and comprises a resin component.

The contents of the first curable composition and the second curable composition to be used in the set of curable compositions may be the same as the contents described in the sections "B-1. First Curable Composition" and "B-2. Second Curable Composition" above, and thus the descriptions thereof are omitted in this section.

### C. Laminate

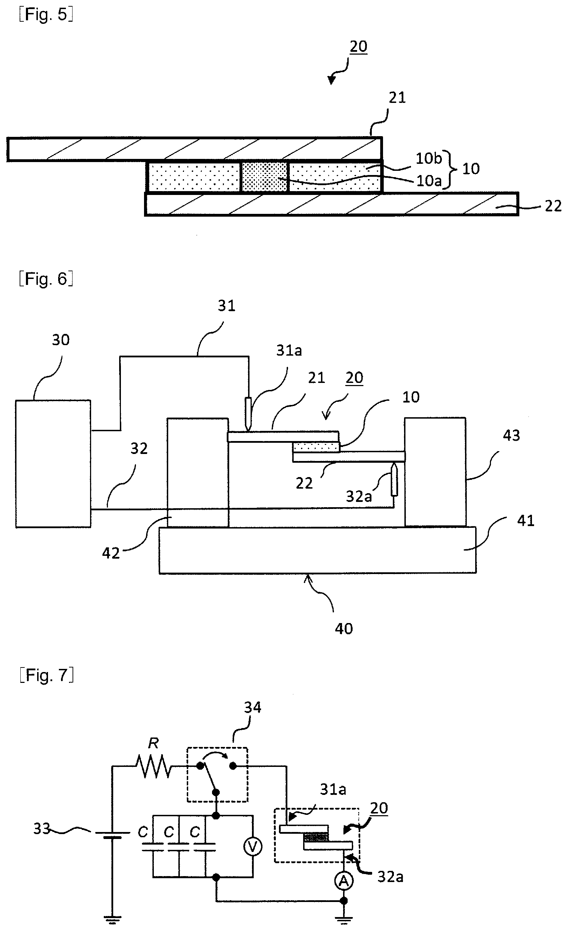

FIG. 5 is a schematic cross-sectional view for illustrating an example of a laminate formed by using the adhesion layer of this disclosure.

As illustrated in FIG. 5, a laminate 20 of this disclosure is characterized by comprising a first member 21 and a second member 22 joined to each other via the adhesion layer 10, and is characterized by being used for electric pulse peeling.

According to this disclosure, the above-mentioned adhesion layer 10 is used, and hence the adhesive strength of the adhesion layer 10 can be easily reduced by the application of the electric pulse. Thus, the first member 21 and the second member 22 can be peeled from each other.

The respective configurations of the laminate 20 of this disclosure are described in detail below.

### C-1. First Member and Second Member

The first member 21 and the second member 22 to be used in this disclosure may each be a conductor or an insulator, or a combination of a conductor and an insulator, but are each preferably a conductor. This is because the effect of this disclosure can be more effectively exhibited.

The conductor may be the same as the material listed as the conductive material described above.

The first member 21 and the second member 22 may each be, for example, a steel plate formed by using an iron alloy, or a plate-shaped member formed by using a metal material, such as aluminum or an aluminum alloy.

The first member 21 and the second member 22 may each be a member in which particles of a metal, such as iron, copper, or aluminum, or an alloy of these metals, and resin particles of, for example, an epoxy resin, a polyimide, a phenol melamine resin, a urea unsaturated polyester resin, or an alkyd polyurethane resin are mixed and integrated.

The first member 21 and the second member 22 may be members formed of different materials, or members formed of the same material. An example of the case in which the members are formed of different materials may be a case in which the first member 21 is a steel material and the second member 22 is an aluminum alloy plate.

The electrical resistivity (20°C) of each of the first member 21 and the second member 22 may be any value as long as a desired reduction in adhesive strength is obtained. For example, the electrical resistivity is preferably 1.5×10⁻⁸ Ω·m or more and 1×10⁴ Ω·m or less, more preferably 1×10⁴ Ω·m or less, still more preferably 5×10³ Ω·m or less, particularly preferably 1×10³ Ω·m or less.

### C-2. Others

The laminate 20 comprises the first member 21, the second member 22, and the adhesion layer 10, but may comprise any other layer as required.

An example of the application of the laminate 20 is an application in which the first member 21 and the second member 22 are taken out by applying an electric pulse, and are desired to be used as a recycled product.

Such application may be the same as the content described in the section "A. Adhesion Layer" above.

### D. Method of reducing Adhesive Strength

Next, the method of reducing an adhesive strength of this disclosure is described. The method of reducing an adhesive strength of this disclosure is characterized by comprising a step of applying an electric pulse to the laminate 20. The method of reducing an adhesive strength of this disclosure is not particularly limited as long as the method comprises the step of applying an electric pulse to the laminate 20. However, the electric pulse is preferably applied with such a high-voltage pulse generator 30 as illustrated in FIG. 6.

### D-1. Step of applying Electric Pulse

The electric pulse may be applied with a high-voltage pulse generator. A known high-voltage pulse generator may be used as the high-voltage pulse generator. For example, a high-voltage pulse generator using a Marx booster circuit described in JP 56-139090 A may be used as the high-voltage pulse generator.

As an example of the high-voltage pulse generator, as illustrated in, for example, FIG. 6, a pair of electrodes (a positive electrode 31a and a negative electrode 32a) is connected to the output terminals of the high-voltage pulse generator 30 through use of cables 31 and 32, and the pair of electrodes (the positive electrode 31a and the negative electrode 32a) is arranged so as to be connected to the first member 21 and second member 22 of the laminate 20, respectively. When an electric pulse is applied from the high-voltage pulse generator 30 in this state, the electric pulse is applied to the adhesion layer 10 via the first member 21 and the second member 22.

In FIG. 6, the laminate 20 is fixed by a work table 40 including a base 41 and a pair of clamping tools 42 and 43 arranged on the base 41.

In addition, in FIG. 6, the connection positions of the positive electrode 31a and the negative electrode 32a with the first member 21 and the second member 22 are positions that do not overlap with the adhesion layer 10 in plan view.

As illustrated in FIG. 7, the high-voltage pulse generator 30 is configured such that the electric pulse is applied to the electrodes that abut on the laminate 20 serving as a target object by switching a mechanical switch 34 to the discharge side (electrode side) after a capacitor C is charged from a DC power source (charger) 33. The application of the electric pulse can be performed a plurality of times through repeated charge and discharge by switching the mechanical switch between the charge side and the discharge side.

Here, the phrase "applying the electric pulse once" means switching the switch from the charge side to the discharge side once.

As illustrated in FIG. 6, in this step, the application positions of the electric pulse, that is, the connection positions of the pair of electrodes (the positive electrode 31a and the negative electrode 31b) connected to the high-voltage pulse generator 30 may be the first member 21 and the second member 22 of the laminate, respectively, and may each be a position overlapping with the adhesion layer 10 in plan view, or a position not overlapping therewith.

In this step, when the first member 21 and the second member 22 each comprise an insulator, the connection positions are each preferably a position close to the adhesion layer 10 in plan view, more preferably a position overlapping with the adhesion layer 10 in plan view, still more preferably a position overlapping with the first adhesion layer 10a in plan view.

In this step, when the adhesion layer 10 includes two or more first adhesion layers 10a and the first adhesion layer 10a serving as a discharge location of interest is present, the connection positions are each preferably a position overlapping with the first adhesion layer 10a of interest in plan view. This is because discharge is easily induced to the first adhesion layer 10a of interest at the time of the application of the electric pulse.

The applied voltage by the electric pulse may be any voltage as long as the adhesion layer 10 capable of being stably reduced in adhesive strength after the application of the electric pulse can be obtained. However, the voltage is preferably 0.1 kV or more and 200 kV or less, more preferably 1 kV or more and 100 kV or less, still more preferably 10 kV or more and 80 kV or less, most preferably 20 kV or more and 60 kV or less. This is because the adhesive strength of the adhesion layer 10 after the application of the electric pulse can be more stably reduced.

The environment in which the electric pulse is applied may be any environment as long as the adhesive strength of the adhesion layer 10 can be stably reduced after the application of the electric pulse. The application may be performed in a gas phase such as an air atmosphere, or in a liquid such as water.

The gas phase may be in a vacuum or a reduced-pressure environment.

The pressure of the air atmosphere may encompass atmospheric pressure (1,013.25 hPa) and neighboring gas pressures, and may also encompass pressures within the range of normal changes of atmospheric pressure. The atmospheric pressure may be set to fall within the range of, for example, 700 hPa or more and 1,300 hPa or less.

In this disclosure, the environment is preferably in a gas phase, more preferably in the air atmosphere. This is because the application of the electric pulse becomes easy.

The temperature condition under which the electric pulse is applied may be any condition as long as the adhesion layer 10 capable of being stably reduced in adhesive strength after the application of the electric pulse can be obtained. However, the temperature condition is preferably -40°C or more and 150°C or less, more preferably -20°C or more and 100°C or less, still more preferably -10°C or more and 50°C or less. This is because the adhesive strength of the adhesion layer 10 can be more stably reduced after the application of the electric pulse.

The target of the temperature condition may be the temperature of the adhesion layer 10 to which the electric pulse is applied.

When the environment in which the electric pulse is applied is in a gas phase, a relative humidity in the gas phase, as the temperature condition, may be any humidity as long as the adhesive strength of the adhesion layer 10 can be stably reduced after the application of the electric pulse. The relative humidity may be, for example, 1%RH or more and 99%RH or less.

The number of times of the application of the electric pulse in this step may be one or more, and for example, is preferably 1 or more and 20 or less, more preferably 1 or more and 10 or less. This is because the adhesive strength of the adhesion layer 10 can be more stably reduced after the application of the electric pulse.

In this step, the electric pulse to be applied has a voltage/current waveform accompanied by damped oscillation.

The pulse width of the electric pulse, that is, the interval per cycle of the voltage and current waveforms may be 1 ns or more and 100 ms or less, and is preferably 10 ns or more and 1 ms or less, more preferably 1 µs or more and 500 µs or less, still more preferably 5 µs or more and 100 µs or less. This is because the adhesive strength of the adhesion layer 10 can be more stably reduced after the application of the electric pulse.

The method of this disclosure comprises the step of applying the electric pulse, but may comprise any other step as required.

Examples of such other step include: a fixing step of fixing the laminate 20 to the work table 40 before the step of applying the electric pulse; and an unfixing step of removing the laminate 20 from the work table 40 after the step of applying the electric pulse.

### E. Method of producing Recycled Product

Next, the method of producing a recycled product of this disclosure is described.

The method of producing a recycled product of this disclosure comprises using the above-mentioned method of reducing an adhesive strength. Specifically, the method is characterized by comprising a step of applying an electric pulse to the laminate 20 comprising the first member 21 and the second member 22 joined to each other via the adhesion layer 10, and is characterized in that the adhesion layer 10 comprises the first adhesion layer 10a and the second adhesion layer 10b having a dielectric strength higher than that of the first adhesion layer 10a.

According to this disclosure, the adhesion layer 10 described above is used together with the electric pulse, and hence a recycled product can be easily produced.

The method of producing a recycled product of this disclosure comprises a step of applying an electric pulse.

The respective steps of the production method of this disclosure are described in detail below.

### E-1. Step of applying Electric Pulse

This step is a step of applying an electric pulse to the laminate 20.

The conditions and the like of the electric pulse to be applied in this step are the same as the contents described in the section "D. Method of reducing Adhesive Strength" above, and thus the description thereof is omitted in this section.

### E-2. Other Steps

The method of obtaining a recycled member of this disclosure comprises the step of applying the electric pulse, but may comprise any other step as required.

Examples of such other step include: a separation step of separating the first member 21 and the second member 22 from the adhesion layer 10 having a reduced adhesive strength after the step of applying the electric pulse; and a removal step of removing the remainder of the adhesion layer 10 remaining on the first member 21 and the second member 22 after the separation.

An example of a separation method in the separation step is a method of tearing off the first member 21 and the second member 22 from the adhesion layer 10 manually or by mechanical means.

A cleaning method in the removal step may be any method as long as the remainder of the adhesion layer 10 can be removed, and examples thereof include a method of manually removing the adhesion layer, a method of mechanically scraping off the adhesion layer, and a method of dissolving and removing the remainder with a solvent.

### F. Others

This disclosure includes the following aspects.
[1] An adhesion layer, comprising: a first adhesion layer; and a second adhesion layer having a dielectric strength higher than that of the first adhesion layer, wherein the adhesion layer is used for electric pulse peeling.
[2] The adhesion layer according to Item [1], wherein an absolute value of a difference between the dielectric strength of the first adhesion layer and the dielectric strength of the second adhesion layer is 0.1 kV/mm or more and 60 kV/mm or less.
[3] The adhesion layer according to Item [1] or [2], wherein the dielectric strength of the first adhesion layer falls within a range of 1 kV/mm or more and 60 kV/mm or less.
[4] The adhesion layer according to any one of Items [1] to [3], wherein the first adhesion layer and the second adhesion layer have the same thickness.
[5] The adhesion layer according to any one of Items [1] to [4], wherein the thickness of the first adhesion layer is 1 µm or more and 2 mm or less.
[6] The adhesion layer according to any one of Items [1] to [5], wherein a formation area of the first adhesion layer is 1 mm² or more.
[7] The adhesion layer according to any one of Items [1] to [6], wherein the second adhesion layer is disposed adjacent to the entire outer periphery of the first adhesion layer.
[8] The adhesion layer according to any one of Items [1] to [7], wherein the first adhesion layer is disposed on an inner side of the outer periphery of the adhesion layer by a distance of 1 mm or more.
[9] The adhesion layer according to any one of Items [1] to [8], wherein the first adhesion layer comprises a conductive material and a cured product of a resin component.
[10] The adhesion layer according to any one of Items [1] to [9], wherein the first adhesion layer is formed by using a first curable composition comprising a conductive material and a resin component.
[11] The adhesion layer according to Item [9] or [10], wherein the resin component comprises at least one selected from an epoxy-based resin, an acrylic resin, and a urethane-based resin.
[12] The adhesion layer according to any one of Items [9] to [11], wherein a content of the conductive material falls within a range of 0.05 part by mass or more and 40 parts by mass or less in 100 parts by mass of the first adhesion layer.
[13] The adhesion layer according to any one of Items [9] to [12], wherein the conductive material has a particle diameter of 0.01 µm or more and 1,000 µm or less.
[14] A laminate, comprising a first member and a second member joined to each other via an adhesion layer, wherein the adhesion layer comprises a first adhesion layer and a second adhesion layer having a dielectric strength higher than that of the first adhesion layer, and wherein the laminate is used for electric pulse peeling.
[15] A curable composition, comprising a conductive material and a resin component, wherein the curable composition is used for forming a first adhesion layer of an adhesion layer comprising the first adhesion layer and a second adhesion layer having a dielectric strength higher than that of the first adhesion layer, the adhesion layer being used for electric pulse peeling.
[16] A set of curable compositions used for electric pulse peeling, the set comprising: a first curable composition comprising a conductive material and a resin component; and a second curable composition that is free of the conductive material or comprises a smaller amount of the conductive material than in the first curable composition, and comprises a resin component.
[17] A method of reducing an adhesive strength, the method comprising a step of applying an electric pulse to a laminate comprising a first member and a second member joined to each other via an adhesion layer, wherein the adhesion layer comprises a first adhesion layer and a second adhesion layer having a dielectric strength higher than that of the first adhesion layer.
[18] A method of producing a recycled product, the method comprising a step of applying an electric pulse to a laminate comprising a first member and a second member joined to each other via an adhesion layer, wherein the adhesion layer comprises a first adhesion layer and a second adhesion layer having a dielectric strength higher than that of the first adhesion layer.

This disclosure is not limited to the above-mentioned embodiments. The above-mentioned embodiments are illustrative, and any embodiment having substantially the same configuration as that of the technical idea described in Claims of this disclosure and exhibiting an action and effect similar thereto is encompassed in the technical scope of this disclosure.

### Examples

This disclosure is described in more detail below by way of Examples and Comparative Examples, but this disclosure is not limited to these Examples and the like.

### <Preparation of Curable Composition>

Respective components were loaded into a vessel in blending amounts shown in Table 1 below, and were stirred with a spatula at 25°C for 5 minutes. After that, the resultant was stirred with a planetary stirring machine and further stirred with a roll-type kneader. Thus, an adhesive composition was prepared.

**Table 1**

| Component | Blending amount (part (s) by mass) |
|---|---|
| ADEKA RESIN EP-4300E*¹ (bisphenol A-type epoxy resin) | 60 |
| ADEKA RESIN EP-49-10P2*² (chelate-modified epoxy resin) | 10 |
| ADEKA RESIN EPR-1630*³ (rubber-modified epoxy resin) | 10 |
| ADEKA RESIN QR-9466*⁴ (blocked urethane resin) | 20 |
| Dicyandiamide | 7 |
| Calcium oxide | 2 |
| 1,1-Dimethyl-3-phenylurea | 1 |

| | |
|---|---|
| *1 to 4: manufactured by ADEKA Corporation | |

Carbon black (Acetylene Carbon Black manufactured by Stem Chemicals, Inc., particle diameter: 42 nm, density: 1.8 g/cm³) serving as a conductive material was added in amounts shown in Table 2 below to 100 parts by mass of the resultant adhesive composition, followed by mixing with a roll-type kneader, to prepare curable compositions 1 to 5 each comprising carbon black.

A curable composition comprising only the above-mentioned adhesive composition without addition of carbon black was used as a curable composition 6.

In Table 2, the vol% of carbon black indicates the volume ratio of carbon black to the entirety of each curable composition. In addition, in this example, the vol% of carbon black has the same value as the volume ratio of carbon black in an adhesion layer formed by using the above-mentioned curable composition.

### <Measurement of Dielectric Strength>

Two stacked release tapes (manufactured by Nitto Denko Corporation; NITOFLON adhesive tape, width: 150 mm, thickness: 150 um) were attached in a frame shape surrounding a 50 mm×50 mm square region on a glass plate. Next, each of the prepared curable compositions 1 to 6 was applied into the frame on the glass plate attached in a frame shape, and then cured at 180°C for 30 minutes. Thus, a 50 mm×50 mm square cured film having a thickness of 300 µm was produced.

Next, the resultant cured film was sandwiched between two electrodes (circular shape with a diameter of 25 mm) in an insulating oil (silicone), and a voltage was applied while the voltage was increased at a rate of 1 kV/s. A voltage when the cured film underwent dielectric breakdown and a current of 100 mA flowed was defined as a dielectric breakdown voltage (kV).

A dielectric strength (kV/mm) was calculated from the resultant dielectric breakdown voltage (kV) and the thickness of the cured film.

**Table 2**

| | | Curable composition | | | | | |
|---|---|---|---|---|---|---|---|
| | | 1 | 2 | 3 | 4 | 5 | 6 |
| Adhesive composition | Part (s) by mass | 100 | 100 | 100 | 100 | 100 | 100 |
| Carbon black | Part (s) by mass | 5.28 | 1.98 | 1.06 | 0.45 | 0.11 | 0 |
| | vol% | 3.4 | 1.3 | 0.7 | 0.3 | 0.07 | 0 |
| Dielectric strength | | 15 | 21 | 38 | 51 | 57 | 62 |

### [Example 1]

A laminate was produced with reference to JIS K 6850.

Specifically, surfaces of two steel plates (length: 100 mm, width: 25 mm, thickness: 16 mm, SPCC-SD 240 polished) having the same shape were degreased with acetone.

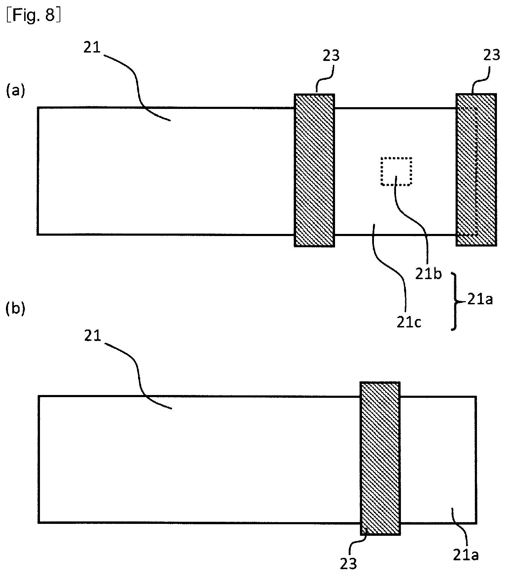

Next, as illustrated in FIG. 8A, two insulating tapes 23 each having a thickness of 0.18 mm (manufactured by Nitto Denko Corporation; NITOFLON adhesive tape, width: 10 mm, thickness: 0.18 mm) were attached onto one of the steel plates (first member 21). The first insulating tape 23 was attached so as to cover a region of from 0 mm to 5 mm under a state in which the insulating tape 23 protruded by 5 mm from an end portion of the steel plate, and the second insulating tape 23 was attached at a distance of 25 mm in the longitudinal direction of the steel plate from an end portion of the first insulating tape 23, and an adhesion layer formation region 21a (a square of 25 mm in the longitudinal direction of the steel plate×25 mm in the transverse direction of the steel plate) in which the two insulating tapes 23 were disposed at both ends was set.

Next, a frame having a 5 mm×5 mm square opening and having a height of 0.18 mm was disposed so that the center of gravity of the adhesion layer formation region 21a was the center of the opening, and the inside of the opening was defined as a first adhesion layer formation region 21b (5 mm×5 mm square). Next, the curable composition 1 was applied into the opening so as to have a thickness of 0.18 mm. Accordingly, the position of the first adhesion layer formation region 21b was formed so that the center of gravity of the first adhesion layer formation region 21b and the center of gravity of the adhesion layer formation region 21a were the same in plan view. Next, the frame was removed, and the curable composition 6 was applied into a second adhesion layer formation region 21c, which was a portion except the first adhesion layer formation region 21b in the adhesion layer formation region 21a, so as to have a thickness of 0.18 mm.

Next, the other steel plate (second member 22) was disposed on the one steel plate (first member 21) so that the two steel plates were stacked on each other only in a region where the insulating tapes 23 were attached and a region where the curable composition was applied.

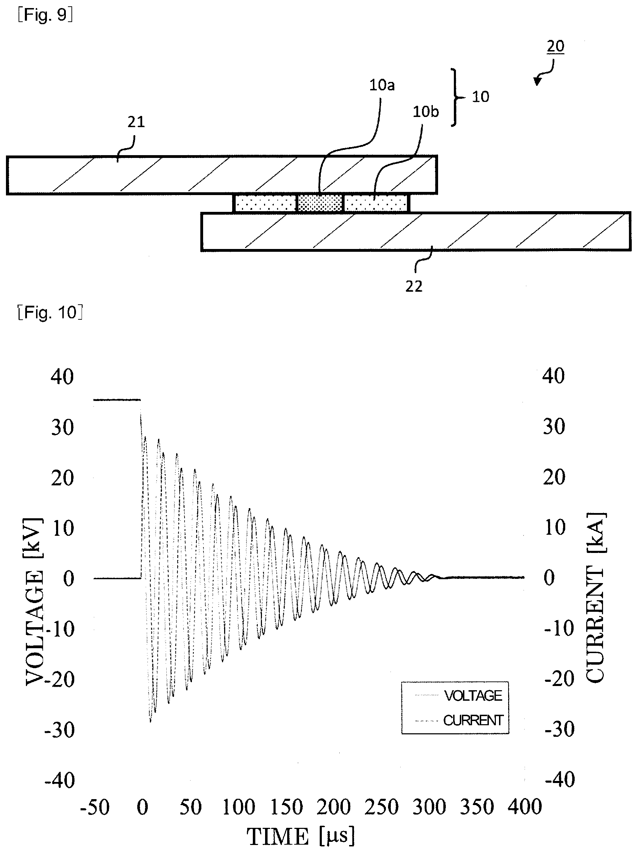

Next, the steel plates in the state of being superimposed on each other as described above were loaded into a curing furnace, and the curable composition was cured under the conditions of 180°C and 30 minutes. Thus, a laminate 20 comprising the two steel plates (the first member 21 and the second member 22) joined to each other via the adhesion layer 10 as illustrated in the schematic view of FIG. 9 was produced.

In addition, although the laminate 20 remains with the insulating tapes 23 described above attached thereto, the illustration of the insulating tapes 23 is omitted in FIG. 9 for easy understanding.

### [Examples 2 to 5]

The laminates 20 were produced in the same manner as in Example 1 except that the curable composition 1 used for the first adhesion layer 10a was changed to curable compositions shown in Table 3 below.

### [Examples 6 to 8]

The laminates 20 were produced in the same manner as in Example 1 except that the shape in plan view of the first adhesion layer 10a was changed to shapes shown in Table 3 below.

In the same manner as in Example 1, the first adhesion layer formation region 21b was set at a position where the center of gravity of the first adhesion layer formation region 21b and the center of gravity of the adhesion layer formation region 21a were the same in plan view.

### [Comparative Examples 1 to 4]

As illustrated in FIG. 8B, the insulating tape 23 was attached at a position of 12.5 mm in the longitudinal direction from the end portion of the steel plate (first member 21), and an adhesion layer formation region (a rectangle of 12.5 mm in the longitudinal direction of the steel plate×25 mm in the transverse direction of the steel plate) defined by the end portion of the steel plate and the insulating tape was set.

Next, the entire surface of the adhesion layer formation region 21a formed on the steel plate was defined as a first adhesion layer formation region, and the curable compositions 1 to 4 were each applied. Laminates were each produced in the same manner as in Example 1 except that the second adhesion layer formation region was not set.

### [Comparative Example 5]

A laminate was produced in the same manner as in Comparative Example 1 except that the entire surface of the adhesion layer formation region 21a was defined as a second adhesion layer formation region, and the first adhesion layer formation region was not set.

### <Application of Electric Pulse>

Ten laminates produced in each of Examples 1 to 8 and Comparative Examples 1 to 5 were prepared, and an electric pulse was applied to five of the laminates through use of the high-voltage pulse generator 30 described in FIG. 6.

As illustrated in FIG. 6, through use of the laminate 20 as an object, a pair of electrodes (the positive electrode 31a and the negative electrode 32a) were connected, respectively, to the steel plate (first member 21) and the steel plate (second member 22) joined to each other via the adhesion layer 10.

The connection positions of the respective electrodes with the first member 21 and the second member 22 are positions about 50 mm apart from the formation region of the adhesion layer 10, and are positions not overlapping with the adhesion layer 10 in plan view. In addition, the respective electrodes were brought into abutment against the surfaces of the first member 21 and the second member 22 on an opposite side to the formation region of the adhesion layer 10.

Next, as illustrated in the circuit diagram of FIG. 7, the capacitor C was charged to 2.4 µF by a DC power source (charger) 33 at a charge voltage of 35.4 kV, and an electric pulse was applied once to the respective electrodes by switching the mechanical switch 34 of a circuit to the electrode side (discharge side).

The application of the electric pulse was performed under the condition of 1 atm in an environment at a temperature of 25°C and a humidity of 60%RH.

In addition, the voltage/current waveforms of the applied electric pulse were waveforms accompanied by damped oscillation shown in FIG. 10, the pulse width per cycle of the waveforms was 20 µs, and an oscillation convergence time was 320 µs.

### [Evaluation]

For the laminates to which the electric pulse was applied, the position of a discharge mark during the application of the electric pulse was observed, and a tensile strength (adhesive strength) was measured. In addition, of the ten prepared laminates, five laminates without application of the electric pulse were subjected to the measurement of the tensile strength (n=5) .

### 1. Internal Discharge Ratio

For the laminates (n=5) after the application of the electric pulse (after a tensile shear test for a laminate that was not completely peeled), the presence or absence of a discharge mark was visually observed, and the ratio at which a discharge mark was observed in the adhesion layer (ratio of internal discharge marks) was measured.

### 2. Number of Complete Peelings

For the laminates (n=5) after the application of the electric pulse, the number of the laminates in which the first member and the second member were separated only by the application of the electric pulse was counted as the number of complete peelings.

### 3. Measurement of Tensile Strength (Adhesive Strength)

Each of the laminates of Examples 1 to 8 and Comparative Examples 1 to 5 was subjected to a tensile shear test in conformity with JIS K 6850. The tensile strengths of the laminates (n=5) after the application of the electric pulse and the tensile strengths of the laminates (n=5) without application of the electric pulse were each measured.

For the laminates after the application of the electric pulse, only the laminate that was not completely peeled was used as a measurement target.

Specifically, in each of the laminates, one steel plate was pulled in a reverse direction to the other steel plate with a universal tester (manufactured by Shimadzu Corporation, AGIS-100kN) under the conditions of 25°C and 5 mm/min, and the tensile strength when the two steel plates (the first member 21 and the second member 22) were peeled from each other, that is, when the adhesion layer broke, was measured as an adhesive strength. The results are shown in Table 3 below.

Adhesive strength before application (MPa): The strength is an average of n=5.

Adhesive strength after application (MPa): The strength represents an average value of the adhesive strengths of the laminates that were not completely peeled, and differences from the average value to the maximum adhesive strength and the minimum adhesive strength.

Average adhesive strength after application (MPa): The strength is a value obtained by dividing the sum of the adhesive strengths of the laminates that were not completely peeled by n=5.

Adhesive strength reduction rate (%): The rate is a value represented by average adhesive strength after application (MPa)/adhesive strength before application (MPa)×100 (%).

It can be judged that the adhesive strength of the adhesion layer can be more stably reduced by the application of the electric pulse as the adhesive strength reduction rate becomes higher.

### 4. Appearance Observation

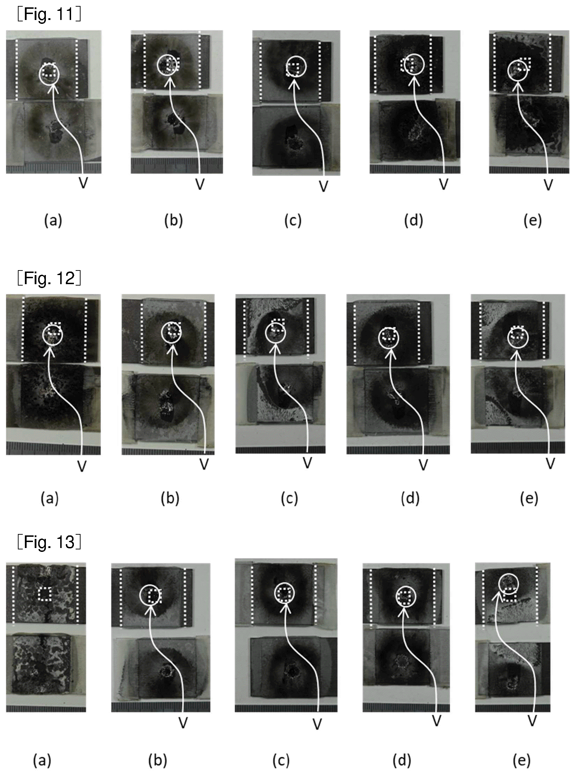

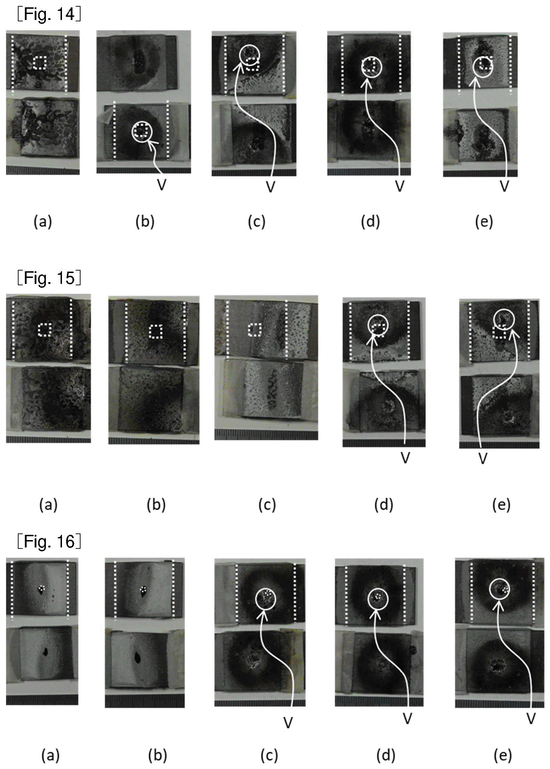

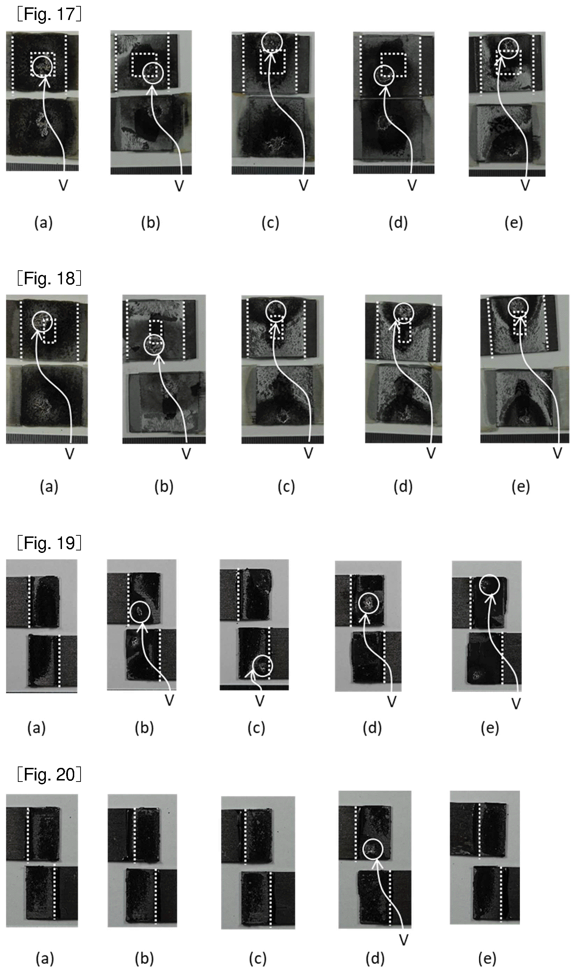

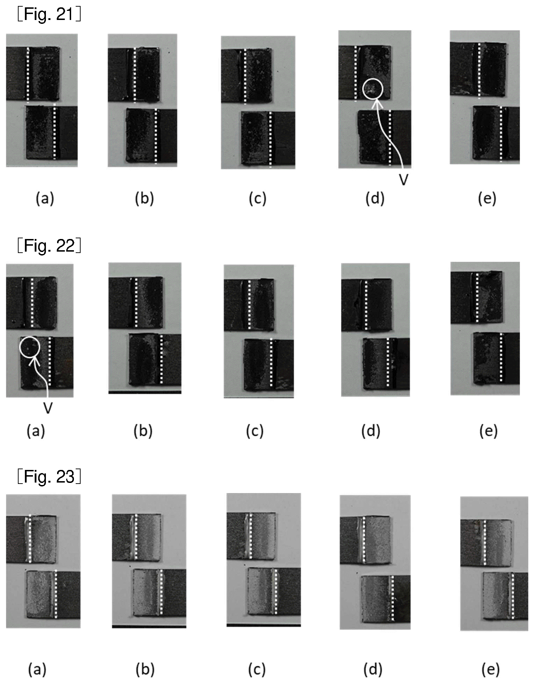

Enlarged photographs of the respective steel plates on the side on which the adhesion layer was formed after the application of the electric pulse (after a tensile shear test for the laminate that was not completely peeled) on each of the laminates of Examples 1 to 8 and Comparative Examples 1 to 5 are shown in FIGS. 11A to 11E through FIGS. 23A to 23E. The position of a white circle on each of the photographs is an internal discharge mark V indicating that internal discharge occurred in the adhesion layer. Each of the photographs in which the white circle is not shown indicates that edge discharge occurred instead of the internal discharge, or a discharge mark was not able to be observed. A white dotted line in each of the enlarged photographs indicates the end portion of the adhesion layer, and a region surrounded by the white dotted line in each of FIGS. 11 to FIGS. 18 indicates an approximate position of the first adhesion layer.

**Table 3**

| | | Example | | | | | | | | Comparative Example | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Adhesion layer | Shape | Square | Square | Square | Square | Square | Square | Square | Square | Rectangular | Rectangular | Rectangular | Rectangular | Rectangular |
| | Area (mm²) | 625 (25×25) | 625 (25×25) | 625 (25×25) | 625 (25×25) | 625 (25×25) | 625 (25×25) | 625 (25×25) | 625 (25×25) | 312.5 (12.5×25) | 312.5 (12.5×25) | 312.5 (12.5×25) | 312.5 (12.5×25) | 312.5 (12.5×25) |
| | Difference in dielectric strength (kV/mm) | 47 | 41 | 24 | 11 | 5 | 47 | 47 | 47 | - | - | - | - | - |
| First adhesion layer | Shape | Square | Square | Square | Square | Square | Circular | Square | Rectangular | Rectangular | Rectangular | Rectangular | Rectangular | - |
| | Area (mm²) | 25 (5×5) | 25 (5×5) | 25 (5×5) | 25 (5×5) | 25 (5×5) | 3 (Diameter : 2) | 100 (10×10) | 50 (5×10) | 312.5 (12.5×25) | 312.5 (12.5×25) | 312.5 (12.5×25) | 312.5 (12.5×25) | |
| | Curable composition | 1 | 2 | 3 | 4 | 5 | 1 | 1 | 1 | 1 | 2 | 3 | 4 | |
| | Dielectric strength (kV/mm) | 15 | 21 | 38 | 51 | 57 | 15 | 15 | 15 | 15 | 21 | 38 | 51 | |
| Second adhesion layer | Area (mm²) | 600 | 600 | 600 | 600 | 600 | 622 | 525 | 575 | | | | | 312.5 (12.5×25) |
| | Curable composition | 6 | 6 | 6 | 6 | 6 | 6 | 6 | 6 | | | | | 6 |
| | Dielectric strength (kV/mm) | 62 | 62 | 62 | 62 | 62 | 62 | 62 | 62 | | | | | 62 |
| Evaluation | Number of times of electric pulse application | 1 | 1 | 1 | 1 | 1 | 1 | 1 | 1 | 1 | 1 | 1 | 1 | 1 |
| | Ratio of internal discharge (%) | 100 | 100 | 80 | 80 | 40 | 60 | 100 | 100 | 80 | 20 | 20 | 20 | 0 |
| | Number of complete peelings | 5 | 3 | 3 | 2 | 0 | 3 | 3 | 1 | 0 | 0 | 0 | 0 | 0 |
| | Adhesive strength before application (MPa) | 17 | 19.7 | 16.7 | 16.5 | 16.8 | 20.3 | 20.1 | 19.9 | 33.2 | 33.9 | 33.6 | 33.3 | 33.1 |
| | Adhesive strength after application (MPa) | 0 | 6.8 ±1.87 | 10.4 ±0.97 | 14.9 ±4.25 | 12.5 ±7.45 | 20.0 ±0.10 | 9.74 ±5.27 | 12.9 ±4.33 | 23.4 ±8.9 | 30.4 +3.8 | 29.8 ±4.2 | 30.9 ±2.5 | 33.2 ±0.4 |
| | Average adhesive strength after application (MPa) | 0 | 2.7 | 4.2 | 8.9 | 12.5 | 8 | 3.8 | 10.8 | 23.4 | 30.4 | 29.8 | 30.9 | 33.2 |
| | Adhesive strength reduction rate (%) | 100 | 86 | 75 | 46 | 26 | 61 | 81 | 46 | 30 | 10 | 11 | 7 | 0 |

As shown in Table 3, it was able to be recognized that internal discharge was caused to occur in the first adhesion layer by using the adhesion layer of each of Examples, and the adhesive strength of the adhesion layer was able to be stably reduced by the application of the electric pulse.

### Industrial Applicability

The adhesion layer of this disclosure can be utilized in the dismantling of, for example, home appliances and mobile communication terminals that are not used any longer along with breakdown or a change in product life cycle.

### Reference Signs List

- 10: adhesion layer
- 10a: first adhesion layer
- 10b: second adhesion layer
- 20: laminate
- 21: first member
- 21a: adhesion layer formation region
- 21b: first adhesion layer formation region
- 21c: second adhesion layer formation region
- 22: second member
- 23: insulating tape
- 30: high-voltage pulse generator
- 31, 32: cable
- 31a: positive electrode
- 32a: negative electrode
- 33: DC power source (charger)
- 34: mechanical switch
- 40: work table
- 41: base
- 42, 43: clamping tool
- V: internal discharge mark

## Claims

1. An adhesion layer, comprising:
a first adhesion layer; and
a second adhesion layer having a dielectric strength higher than that of the first adhesion layer,
wherein the adhesion layer is used for electric pulse peeling.

2. The adhesion layer according to claim 1, wherein an absolute value of a difference between the dielectric strength of the first adhesion layer and the dielectric strength of the second adhesion layer falls within a range of 0.1 kV/mm or more and 60 kV/mm or less.

3. The adhesion layer according to claim 1, wherein the dielectric strength of the first adhesion layer is 1 kV/mm or more and 60 kV/mm or less.

4. The adhesion layer according to claim 1, wherein the first adhesion layer and the second adhesion layer have the same thickness.

5. The adhesion layer according to claim 1, wherein the first adhesion layer comprises a conductive material and a cured product of a resin component.

6. The adhesion layer according to claim 5, wherein the resin component comprises at least one selected from an epoxy-based resin, an acrylic resin, and a urethane-based resin.

7. The adhesion layer according to claim 5, wherein the content of the conductive material is 0.05 part by mass or more and 40 parts by mass or less in 100 parts by mass of the first adhesion layer.

8. The adhesion layer according to claim 1, wherein the second adhesion layer is disposed adjacent to the entire outer periphery of the first adhesion layer.

9. A laminate, comprising a first member and a second member joined to each other via an adhesion layer,
wherein the adhesion layer comprises a first adhesion layer and a second adhesion layer having a dielectric strength higher than that of the first adhesion layer, and
wherein the laminate is used for electric pulse peeling.

10. A curable composition, comprising a conductive material and a resin component,
wherein the curable composition is used for forming a first adhesion layer of an adhesion layer comprising the first adhesion layer and a second adhesion layer having a dielectric strength higher than that of the first adhesion layer, the adhesion layer being used for electric pulse peeling.

11. A method of producing a recycled product, the method comprising a step of applying an electric pulse to a laminate comprising a first member and a second member joined to each other via an adhesion layer,
wherein the adhesion layer comprises a first adhesion layer and a second adhesion layer having a dielectric strength higher than that of the first adhesion layer.

12. A method of reducing an adhesive strength, the method comprising a step of applying an electric pulse to a laminate comprising a first member and a second member joined to each other via an adhesion layer,
wherein the adhesion layer comprises a first adhesion layer and a second adhesion layer having a dielectric strength higher than that of the first adhesion layer.
